# EUROPÄISCHE PATENTSCHRIFT

(11) **EP 2 942 144 B1**
(45) Veröffentlichungstag und Bekanntmachung des Hinweises auf die Patenterteilung: **03.07.2024**
(21) Anmeldenummer: 14167330.1
(22) Anmeldetag: 07.05.2014
(51) Int. Cl.: B23K 10/00, H05H 1/34

(54) **Plasmaschneidbrenneranordnung sowie die Verwendung von Verschleißteilen bei einer Plasmaschneidbrenneranordnung**
Plasma cutting torch assembly, as well as the use of wearing parts in a plasma cutting torch assembly
Système de brûleur pour découpage au jet plasma et utilisation de pièces d'usure pour un système de brûleur pour découpage au jet de plasma

(43) Veröffentlichungstag der Anmeldung: 11.11.2015
(73) Patentinhaber: Kjellberg-Stiftung, 03238 Finsterwalde (DE)
(72) Erfinder: Bach, Friedrich-Wilhelm, 03238 Finsterwalde (DE); Hassel, Thomas, 30419 Hannover (DE); Laurisch, Frank, 03238 Finsterwalde (DE); Grundke, Timo, 03238 Finsterwalde (DE); Reinke, Ralf-Peter, 03238 Finsterwalde (DE); Krink, Volker, 03238 Finsterwalde (DE)
(74) Vertreter: Pfenning, Meinig & Partner mbB

(56) Entgegenhaltungen:
- AT-B- 126 939
- DE-U- 7 320 705
- JP-A- H04 284 978
- JP-A- S57 152 380

## Beschreibung

Die Erfindung betrifft eine Plasmaschneidanordnung, die insbesondere zum gleichzeitigen Plasmaschneiden mit mehreren Plasmaschneidbrennern und insbesondere für die gleichzeitige Ausbildung von Fasen an Schnittkanten oder eine gleichzeitige Wärmebehandlung eingesetzt werden kann. Sie betrifft ebenso die Verwendung von Verschleißteilen bei der Plasmaschneidbrenneranordnung.

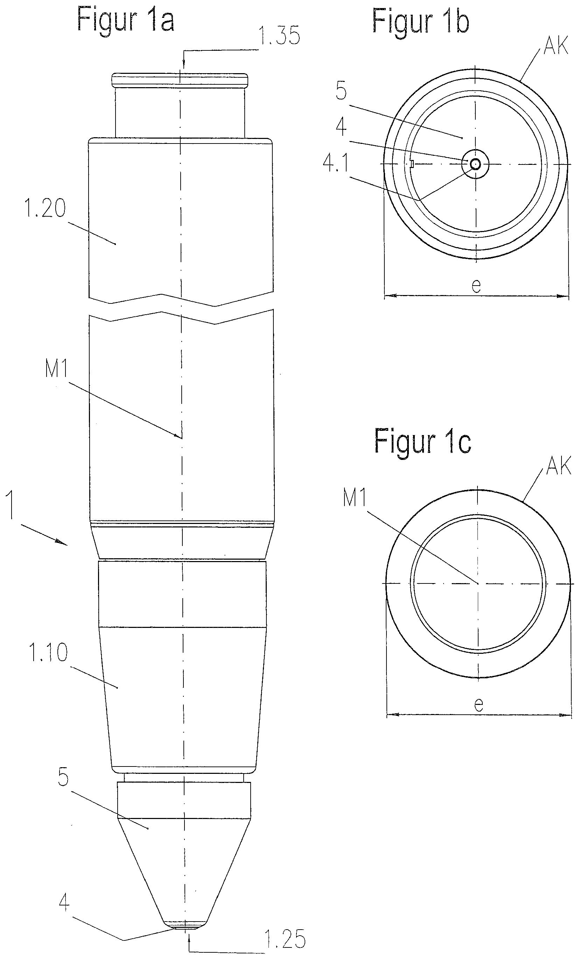

Das Plasmaschneiden wird zum Schneiden von Metallen eingesetzt. Dafür werden Plasmaschneidbrenner verwendet. Beim maschinellen Schneiden können diese von einem Führungssystem, wie z. B. einen CNC-gesteuerten xy-Koordinatenschneidmaschine oder einem Industrieroboter geführt werden. Plasmaschneidbrenner bestehen in der Regel aus einem Brennerschaft und einem Brennerkopf. Im Brennerschaft befinden sich die Anschlüsse für die Medien, die zum Betreiben eines Plasmaschneidbrenners notwendig sind, z.B. für das Gas (Plasmagas), den Strom (Schneidstrom), die Kühlung (Kühlmedium, Kühlwasser), die Zündspannung und/oder Pilotstrom. Die Anschlüssen können auch kombiniert, bspw. Strom und Kühlmedium in einem Anschluss ausgeführt sein. Diese Anschlüsse werden an Schläuche, die zu einem sogenannten Schlauchpaket zusammengefasst sein können, angeschlossen. Es können auch Magnetventile zum Schalten der Gase im Brennerschaft untergebracht sein. Diese Anschlüsse, Schläuche und Komponenten benötigen ein Volumen, das die Größe des Plasmabrennerschaftes bestimmt. Solche Schäfte sind üblicherweise in Zylinderform mit einem bestimmten Außendurchmesser ausgeführt, wodurch die Baugröße bestimmt wird. Vom Ende oder der Spitze des Plasmaschneidbrenners her ausgehend ist dabei eine kreisförmige Außenform gewählt, wie dies aus den Figuren 1a - 1c hervorgeht. Dabei hängt der Außendurchmesser des Kreises von den dafür benötigten Querschnitten der elektrischen Leitungen für den Strom und den Querschnitten der Schlauchleitungen für Gasvolumenströme und Kühlwasserströme und damit auch von der Leistung des Plasmaschneidbrenners ab. Der Durchmesser liegt bei einem Schneidstrombereich von 200 A bis 600 A und dem damit verbundenen Leistungsbereich von 25 kW bis 120 kW im Bereich zwischen 50 mm bis 60 mm. Die beschriebene Bauform hat Nachteile, besonders dann, wenn mehrere Plasmaschneidbrenner möglichst dicht nebeneinander betrieben und/oder zueinander geneigt oder zur Werkstückoberfläche eingesetzt werden sollen. Ebenso besteht auch ein Nachteil, wenn besonders tiefe Schnitte, die tiefer als die maximale mit dem Plasmaschneidbrenner mögliche maximal schneidbare Materialdicke ist, in ein Material eingebracht werden sollen.

Eine Anwendung ist das Schneiden von Fasen an Blechen, die benötigt werden, wenn die Bleche nach dem Zuschnitt verschweißt werden sollen. Dafür gibt es in Abhängigkeit von der Blechdicke und dem Schweißverfahren unterschiedliche Fasenformen bzw. Schweißnahtvorbereitungen (DIN EN ISO 9692-1). Für bestimmte Anwendungen (DY-Naht, Y-Naht) werden mehrere Fasen an einer Blechkante benötigt. Hier können mehrere Plasmaschneidbrenner, die zur Blechoberkante unterschiedlich geneigt sind, gleichzeitig schneiden und fasen ausbilden. Dies wird als Mehrfasenschneiden bezeichnet. Es ist auch möglich, einzelne Fasen mit ein und demselben Plasmaschneidbrenner nacheinander zu schneiden. Nachteilig daran ist die längere Schneidzeit, da die einzelnen Schnitte nacheinander ausgeführt werden und die Gefahr, dass es zwischen den Schnitten zu Verzug oder Verschiebungen im Blech kommt und nicht mehr die gewünschte Geometrie des zu schneidenden Bauteils erreicht wird, ist sehr groß.

Das Mehrfasenschneiden ist mit herkömmlichen Plasmaschneidbrennern nicht oder nur unvollkommen möglich. Besonders dann, wenn mehrere Plasmaschneidbrenner dicht nebeneinander angeordnet und/oder zueinander geneigt oder zur Werkstückoberfläche eingesetzt werden sollen.

Der realisierbare kleinste Abstand zwischen den Plasmastrahlen, die aus der Düse austreten, ist dann gleich dem Außendurchmesser des Plasmabrennerschafts zuzüglich eines Sicherheitsabstandes zwischen den Plasmabrennerschäften, der beispielsweise 1 bis 5 mm betragen kann, wenn die Plasmaschneidbrenner parallel nebeneinander betrieben werden sollen.

Es sind Plasmaschneidbrenner bekannt, die zum Schneiden von Fasen eingesetzt werden können. Dabei verjüngt sich der Brennerkopf in seiner Breite über eine bestimmte Länge mit seinem Außendurchmesser im Bereich der Düse aus der das Plasma austritt. Damit wird eine spitze Bauform erreicht und die Ausbildung von Fasenschnitten wird so bedingt möglich. Aufgrund der zylindrischen runden Form des Plasmabrennerschaftes mit einem entsprechenden Außendurchmesser besteht aber der Nachteil, dass mehrere Plasmaschneidbrenner nicht mit kleinem Abstand aneinander vorbei geschwenkt werden können. Somit können insbesondere veränderliche Fasenwinkel nicht gleichzeitig mit mehreren Plasmabrennern während eines Schnitts ausgebildet werden. Die zum zu schneidenden Werkstück gerichteten Spitzen bzw. Düsenbohrungen der Plasmaschneidbrenner sollen dabei aber möglichst nah zuei- - nander positioniert sein, was durch den Durchmesser des Plasmabrennerschafts bei Schwenkbewegungen der Plasmaschneidbrenner aber begrenzt wird. Diese Nachteile treten auch beim Einsatz mehrerer Plasmaschneidbrenner auf, wenn diese gleichzeitig und nah beieinander für unterschiedliche thermische Bearbeitungen genutzt werden sollen, die beispielsweise nacheinander entlang einer auszubildenden Schnittfuge durchgeführt werden sollen.

Aus AT 126939 B ist eine Vorrichtung zur Erzeugung einer Stichflamme aus einem elektrischen Lichtbogen bekannt.

Die JP 557 152380 A beschreibt einen dünnen Plasmabrenner.

Ein Plasmabrenner mit dem Pulver verarbeitet werden kann, ist in JP H04 284978 A offenbart.

Es ist daher Aufgabe der Erfindung, die Bedingungen und Fertigungsgenauigkeit beim Einsatz mehrerer Plasmaschneidbrenner, die gleichzeitig und nah nebeneinander betrieben werden sollen, zu verbessern.

Erfindungsgemäß wird diese Aufgabe mit einer Plasmaschneidbrenneranordnung, die die Merkmale des Anspruchs 1 aufweist, gelöst. Der Anspruch 7 betrifft die Verwendung von Verschleißteilen. Vorteilhafte Ausgestaltungen und Weiterbildungen der Erfindung können mit in untergeordneten Ansprüchen bezeichneten Merkmalen realisiert werden.

Bei der erfindungsgemäßen Plasmaschneidbrenneranordnung ist mit mindestens ein Plasmaschneidbrenner, der mit einem Brennerkörper, einer Elektrode und einer Düse mit einer Düsenbohrung gebildet ist, vorhanden. Dabei ist in Bezug zu einer Längsachse, die senkrecht durch die Düsenbohrung und den Brennerkörper ausgerichtet ist, eine äußere Kontur des Plasmaschneidbrenners im Querschnitt vorhanden, bei der in mindestens eine Achsrichtung ein kleinster Abstand c zwischen der durch den Mittelpunkt der Düsenbohrung der Düse verlaufenden Längsachse und dem radial äußeren Rand der äußeren Kontur eingehalten, der maximal 3/4 der Länge eines größten Abstandes d zwischen der durch den Mittelpunkt der Düsenbohrung der Düse verlaufenden mittleren Längsachse und dem radial äußeren Rand der äußeren Kontur AK entspricht. Der kleinste Abstand c entspricht auch maximal 3/8 der Länge eines größten Abstandes b zwischen zwei Punkten des äußeren Randes der äußeren Kontur AK, dessen virtuelle gerade Verbindungslinie durch den Mittelpunkt der Düsenbohrung 4.1 der Düse 4 verlaufenden mittleren Längsachse M1, M2, M3 verläuft.

Die äußere Kontur ist also nicht rotationssymmetrisch in Bezug zur durch den Mittelpunkt der Düsenbohrung verlaufenden Längsachse ausgebildet.

In einer vorteilhaften Ausführungen sollte ein kleinster Abstand c entlang einer gemeinsamen Achse ausgehend von der durch den Mittelpunkt der Düsenbohrung der Düse verlaufenden Längsachse bis zum radial äußeren Rand der äußeren Kontur geführten in zwei entgegengesetzten Richtungen eingehalten sein. Dadurch ist es möglich, jeweils einen Plasmaschneidbrenner an zwei gegenüberliegenden Seiten eines so ausgebildeten Plasmaschneidbrenners sehr nah zu diesem bei gleichzeitigem Betrieb, an den Seiten an denen ein kleinster Abstand eingehalten ist, anzuordnen.

Es ist mindestens ein kleinster Abstand c über die gesamte Länge eines Plasmaschneidbrenners eingehalten. In dieser Form können Plasmaschneidbrenner in paralleler Anordnung sehr nah nebeneinander angeordnet betrieben werden.

Ein kleinster Abstand c sollte zumindest über die gesamte Länge der Düse, der Düsenkappe, einer Düsenschutzkappe und ggf. einer Düsenschutzkappenhalterung eingehalten oder nicht überschritten sein.

Ein kleinster Abstand c kann auch über eine Länge l, die mindestens dem 1,4-fachen der maximalen Breite b (größter Abstand des zwischen zwei Punkten des äußeren Randes der äußeren Kontur AK, dessen virtuelle gerade Verbindungslinie durch den Mittelpunkt der Düsenbohrung 4.1 der Düse 4 verlaufenden mittleren Längsachse M1, M2, M3 verläuft) eines Plasmaschneidbrenners in dem Bereich, in dem ein kleinster Abstand c eingehalten ist, entspricht, eingehalten sein. So kann beispielsweise eine Länge l 70 mm bei einer maximalen Breite b von 50 mm (d=25mm) oder eine Länge l von 98 mm bei einer maximalen Breite b von 70 mm (b=35mm) eingehalten worden sein.

In einer Ausführungsform besteht die Möglichkeit, dass der Mittelpunkt der Düsenbohrung exzentrisch innerhalb der äußeren Kontur angeordnet ist. In diesem Fall können alle bzw. sehr viele Elemente des Plasmaschneidbrenners, beispielsweise der Schaft, die Düse, die Düsenhalterung usw. ansonsten einen rotationssymmetrischen Querschnitt aufweisen und es ist trotzdem an einer Seite ein kleinster Abstand c eingehalten.

Vorteilhaft ist es, wenn ein kleinster Abstand c von maximal 1/3, bevorzugt von maximal 1/4 und besonders bevorzugt von maximal 1/6 des größten Abstandes b eingehalten ist.

Vorteilhaft ist es, wenn ein kleinster Abstand c von maximal 2/3, bevorzugt von maximal 1/2 und besonders bevorzugt von maximal 1/3 des größten Abstandes d eingehalten ist.

Ein kleinster Abstand c kann in mindestens einem Winkelbereich α von maximal 120°, bevorzugt maximal 70° ausgehend um die Längsachse eingehalten sein. Dadurch ist die Umfangsfläche, bei der ein kleinster Abstand c eingehalten ist, größer und nebeneinander sowie parallel zueinander angeordnete Plasmabrennschneider können so nah nebeneinander angeordnet und betrieben werden.

Es besteht die Möglichkeit, dass die äußere Kontur in dem axial zur Düsenbohrung nach rechts oder links zur virtuellen Verbindungslinie des kleinsten Abstandes c oder zur virtuellen Verbindungslinie, die auf der Hälfte des Winkelbereiches α des kleinsten Abstandes c angeordnet ist, zwischen einem minimalen Winkel βₘᵢₙ von 60° und dem maximalen Winkel βₘₐₓ von 120° gedrehten Winkelbereich zumindest einen radial zur Düsenbohrung gerichteten größten Abstand b, zwischen zwei Punkten der äußeren Kontur, dessen virtuelle gerade Verbindungslinie die durch den Mittelpunkt der Düsenbohrung der Düse verlaufende virtuelle Längsachse schneidet, aufweist oder zumindest einen radial zur Düsenbohrung gerichteten größten Abstand d zwischen der durch den Mittelpunkt der Düsenbohrung der Düse verlaufenden mittleren Längsachse und dem radial äußeren Rand der äußeren Kontur AK aufweist.

Es kann ein kleinster Abstand c von maximal 20 mm, bevorzugt maximal 15 mm und besonders bevorzugt von maximal 12,5 mm eingehalten sein.

Die äußere Kontur kann eine kreisförmige, mehreckige, eine gekrümmte, eine halbkreisförmige, eine ovale oder eine elliptische Form oder eine Kombination davon aufweisen. Ecken mehreckiger äußerer Konturen können abgerundet sein.

An einem Plasmabrenner sollte mindestens ein kleinster Abstand c einer äu-ßeren Kontur in Richtung mindestens eines weiteren neben dem Plasmabrenner betriebenen Plasmabrenners eingehalten sein.

Bei mehreren nebeneinander und gleichzeitig betriebenen Plasmaschneidbrennern sollte ein maximaler Abstand z1, z2 zwischen virtuell verlängerten Längsachsen der jeweiligen Düsenbohrungen der Düsen von nebeneinander angeordneten Plasmaschneidbrennern von 42 mm, vorteilhaft 32 mm und besonders vorteilhaft 27 mm eingehalten sein. Es kann auch mindestens ein Plasmaschneidbrenner mit seiner Längsachse beim Plasmaschneiden, mit einem Winkel im Bereich zwischen 45° bis 135°, in Bezug zu einer Senkrechten auf eine Bauteiloberfläche geneigt, angeordnet sein.

Mit einer erfindungsgemäßen Anordnung können also mehrere Plasmaschneidbrenner gleichzeitig und sehr nah nebeneinander betrieben werden und es steht trotzdem ausreichender Bauraum für die Unterbringung der für den Betrieb erforderlichen Komponenten zur Verfügung.

Bei der Erfindung soll das Verhältnis des größten Abstandes b zwischen zwei Punkten des äußeren Randes der Außenkontur AK zum kleinsten Abstand b zwischen zwei Punkten des äußeren Randes der Außenkontur AK, deren jeweilige virtuelle gerade Verbindungslinie durch den Mittelpunkt der Düsenbohrung (4.1) der Düse (4) verlaufenden mittleren Längsachse (M1, M2, M3) verläuft nicht größer als 4 sein.

Mit der erfindungsgemäßen Plasmaschneidbrenneranordnung können insbesondere auch Werkstücke mit größerer Dicke geschnitten werden. Dabei können die dazu erforderlichen elektrischen Ströme von mindestens 200 A und auch Düsenöffnungen mit Durchmessern von mindestens 2 mm ohne Probleme genutzt werden. Es können Sauerstoff bzw. Sauerstoff enthaltende Gasgemische als Plasmagas eingesetzt werden. Die Elektrode besteht aus einem Emissionseinsatz aus hochschmelzendem Metall, z. B. Hafnium, Wolfram oder einer Legierung daraus und der Elektrodenhalter aus einem gut wärmeleitendem Material, z. B Kupfer, Silber oder einer Legierung daraus.

Die Verschleißteile des Plasmabrenners, wie die Elektrode, die Düse, die Düsenkappe und/oder die Düsenschutzkappe sind flüssigkeitsgekühlt.

Mehrere Plasmaschneidbrenner einer erfindungsgemäßen Anordnung können mit einem Führungssystem oder mindestens einem Industrieroboter zur Ausbildung von Schnittfugen bewegt werden.

Nachfolgend soll die Erfindung anhand von Beispielen näher erläutert werden.

Dabei zeigen:
- Figur 1a: einen Plasmaschneidbrenner nach dem Stand der Technik in Seitenansicht;
- Figur 1b: einen Plasmaschneidbrenner nach dem Stand der Technik mit Ansicht auf die Plasmabrennerspitze;
- Figur 1c: einen Plasmaschneidbrenner nach dem Stand der Technik mit Ansicht auf das Plasmabrennerende;
- Figur 2a: ein Beispiel eines erfindungsgemäßen Plasmaschneidbrenners in Seitenansicht;
- Figur 2b: ein Beispiel eines erfindungsgemäßen Plasmaschneidbrenners in Seitenansicht;
- Figur 2c: erfindungsgemäßer Plasmaschneidbrenner, Ansicht auf die Plasmabrennerspitze;
- Figur 2d: ein Beispiel eines erfindungsgemäßen Plasmaschneidbrenners mit Ansicht auf die Plasmabrennerspitze;
- Figur 2e: ein Beispiel eines erfindungsgemäßen Plasmaschneidbrenners mit Ansicht auf das Plasmabrennerende;
- Figur 3a: ein Beispiel eines erfindungsgemäßen Plasmaschneidbrenners in Seitenansicht;
- Figur 3b: ein Beispiel eines erfindungsgemäßen Plasmaschneidbrenners in Seitenansicht;
- Figur 3c: ein Beispiel eines erfindungsgemäßen Plasmaschneidbrenner in Ansicht auf die Plasmabrennerspitze;
- Figur 3d: ein Beispiel eines erfindungsgemäßen Plasmaschneidbrenners in Ansicht auf die Plasmabrennerspitze;
- Figur 3e: ein Beispiel eines erfindungsgemäßen Plasmaschneidbrenners in Ansicht auf das Plasmabrennerende;
- Figur 4a - j: Ausführungsbeispiele für äußere Konturen eines Plasmaschneidbrenners von der Plasmabrennerspitze aus betrachtet;
- Figur 5a: ein Schnittbild einer erfindungsgemäßen Anordnung in Seitenansicht;
- Figur 5b: ein Schnittbild einer erfindungsgemäßen Anordnung in Seitenansicht;
- Figur 5c: eine Ansicht auf eine Düsenspitze gemäß Figur 5a;
- Figur 6a: ein Schnittbild einer erfindungsgemäßen Anordnung in Seitenansicht;
- Figur 6b: ein Schnittbild einer erfindungsgemäßen Anordnung in Seitenansicht;
- Figur 6c: ein Ansicht auf eine Düsenspitze gemäß Figur 6a;
- Figur 7a: ein Schnittbild einer erfindungsgemäßen Anordnung in Seitenansicht;
- Figur 7b: ein Schnittbild einer erfindungsgemäßen Anordnung in Seitenansicht;
- Figur 7c: eine Ansicht auf eine Düsenspitze gemäß Figur 7a;
- Figur 8a: ein Schnittbild einer erfindungsgemäßen Anordnung in Seitenansicht;
- Figur 8b: ein Schnittbild einer erfindungsgemäßen Anordnung in Seitenansicht;
- Figur 8c: ein Ansicht auf eine Düsenschutzkappenspitze gemäß Figur 8a;
- Figur 9a: ein Schnittbild einer erfindungsgemäßen Düse in Seitenansicht;
- Figur 9b: ein Schnittbild einer erfindungsgemäßen Düse in Seitenansicht,
- Figur 9c: eine Ansicht auf eine Düsenspitze;
- Figur 9d: eine Ansicht auf ein zur Düsenspitze entgegengesetztes Ende;
- Figur 10a: ein Schnittbild einer erfindungsgemäßen Düsenkappe in Seitenansicht;
- Figur 10b: ein Schnittbild einer erfindungsgemäßen Düsenkappe in Seitenansicht;
- Figur 10c: eine Ansicht auf eine Düsenkappenspitze;
- Figur 10d: eine Ansicht auf ein zur Düsenkappenspitze entgegengesetztes Ende;
- Figur 11a: ein Schnittbild einer erfindungsgemäßen Anordnung aus Düsenkappe und Gasführung in Seitenansicht;
- Figur 11b: ein Schnittbild einer erfindungsgemäßen Anordnung aus Düsenkappe und Gasführung in Seitenansicht;
- Figur 11c: eine Ansicht auf eine Düsenkappenspitze einer Anordnung;
- Figur 11d: eine Ansicht auf ein zur Düsenkappenspitze entgegengesetztes Ende einer Anordnung;
- Figur 12a: ein Schnittbild einer erfindungsgemäßen Düsenschutzkappe in Seitenansicht;
- Figur 12b: ein Schnittbild einer erfindungsgemäßen Düsenschutzkappe in Seitenansicht;
- Figur 12c: eine Ansicht auf eine Düsenschutzkappenspitze;
- Figur 12d: eine Ansicht auf ein zur Düsenschutzkappenspitze entgegengesetztes Ende;
- Figur 13a: ein Schnittbild einer erfindungsgemäßen Düsenschutzkappenhalterung in Seitenansicht;
- Figur 13b: ein Schnittbild einer erfindungsgemäßen Düsenschutzkappenhalterung in Seitenansicht;
- Figur 13c: Ansicht auf Düsenschutzkappenhalterungsspitze
- Figur 13d: eine Ansicht auf ein zur Düsenschutzkappenhalterungsspitze entgegengesetztes Ende;
- Figur 14a: ein Schnittbild einer erfindungsgemäßen Anordnung und Düsenschutzkappe und Düsenschutzkappenhalterung in Seitenansicht;
- Figur 14b: ein Schnittbild einer erfindungsgemäßen Anordnung und Düsenschutzkappe und Düsenschutzkappenhalterung in Seitenansicht;
- Figur 14c: eine Ansicht auf eine Düsenschutzkappenspitze;
- Figur 14d: eine Ansicht auf ein zur Düsenschutzkappenspitze entgegengesetztes Ende;
- Figur 15a-d: Ausführungsbeispiele der äußeren Kontur einer Düsenschutzkappe 8 sowie einer Anordnung aus einer Düsenschutzkappe 8 und Düsenschutzkappenhalterung 9;
- Figur 16a-d: eine Anordnung von zwei Plasmaschneidbrennern und
- Figur 17a-d: eine Anordnung von drei Plasmaschneidbrennern.

Die Figuren 1a bis 1c zeigen einen Plasmaschneidbrenner zum maschinellen Plasmaschneiden nach dem Stand der Technik. Der Plasmaschneidbrenner 1 besteht im Wesentlichen aus einem Plasmabrennerkopf 1.10 und einem Plasmabrennerschaft 1.20, wobei der Plasmabrennerkopf 1.10 und -schaft 1.20 auch als ein Bauteil ausgebildet sein können. Im Plasmabrennerkopf 1.10 sind die Verschleißteile (hier teilweise nicht dargestellt), wie beispielsweise die Elektrode, die Düse, die Gasführung befestigt. Dargestellt sind die Düsenkappe 5 und die Spitze der Düse 4, die an der Plasmabrennerspitze 1.25 aus der Bohrung der Düsenkappe 5 herausragt. Im Plasmabrennerschaft befinden sich beispielsweise die Anschlüsse für elektrische Leitungen für Strom und Spannung sowie Schläuche für Gase und Kühlmedien (hier ebenfalls nicht dargestellt). Figur 1a zeigt die Seitenansicht eines solchen Plasmaschneidbrenners, die Figur 1b die Ansicht auf die Plasmabrennerspitze 1.25 und die Figur 1c die Ansicht auf das Plasmabrennerende 1.35. Dabei wird als Plasmabrennerspitze 1.25 die Position des Plasmaschneidbrenners 1 bezeichnet, an der der Plasmastrahl aus der Düsenbohrung 4.1 der Düse 4 heraustritt. In den Figuren 1b und 1c ist die kreisförmige Form der von vorn oder hinten sichtbaren äußeren Kontur AK mit dem Durchmesser e, hier beispielhaft 50 mm, des Plasmaschneidbrenners 1 dargestellt. Der Übersicht wegen, sind die Schläuche und Leitungen nicht dargestellt, diese würden am Plasmabrennerende 1.35 aus dem Plasmabrennerschaft 1.20 heraus geführt sein.

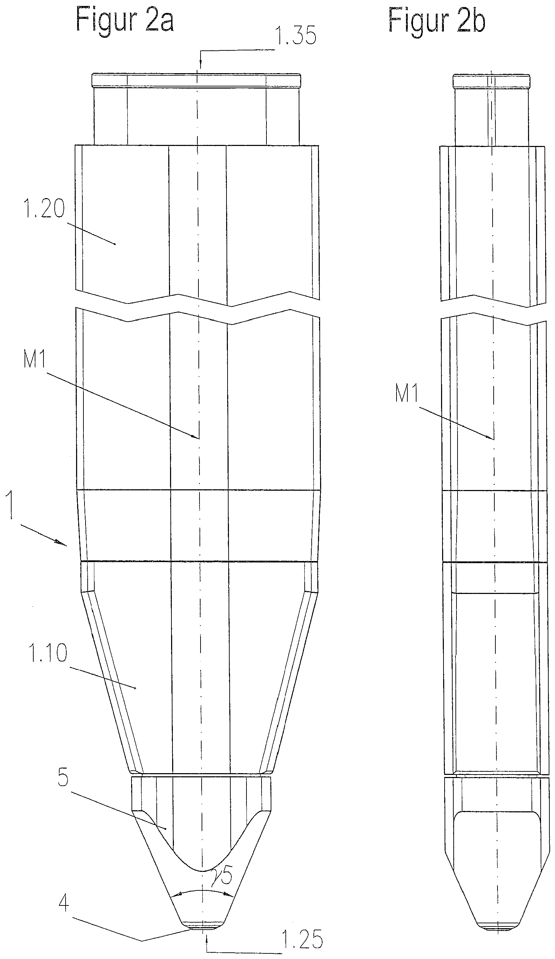

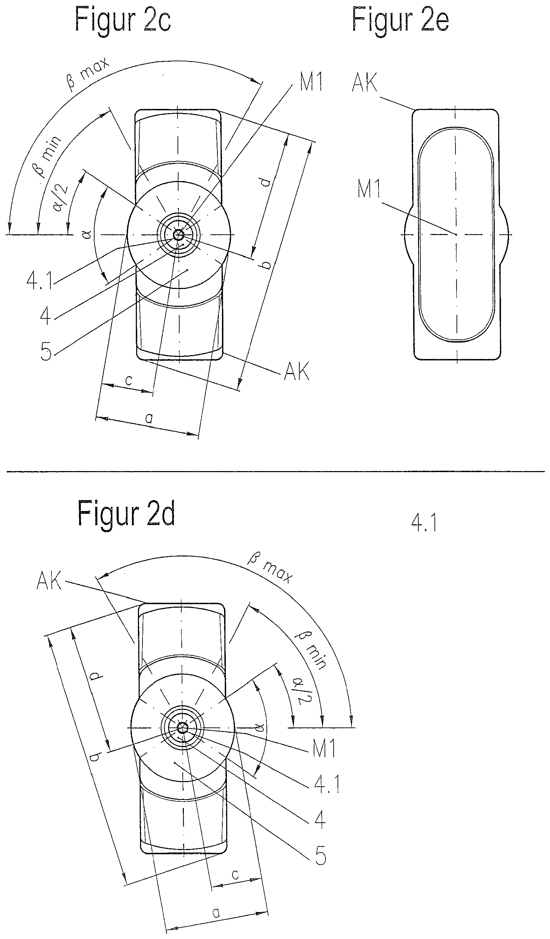

Die Figuren 2a bis 2e zeigen eine Variante eines erfindungsgemäßen Plasmaschneidbrenners. Der Plasmaschneidbrenner 1 besteht im Wesentlichen aus einem Plasmabrennerkopf 1.10 und einem Plasmabrennerschaft 1.20, wobei Plasmabrennerkopf und -schaft auch als ein Bauteil ausgebildet sein können. Im Plasmabrennerkopf sind die Verschleißteile (hier teilweise nicht dargestellt), wie beispielsweise die Elektrode, die Düse, die Gasführung befestigt. Zu sehen sind die Düsenkappe 5 und die Spitze der Düse 4, die an der Plasmabrennerspitze 1.25 aus der Bohrung der Düsenkappe 5 herausragt. Die Düsenkappe 5 hat einen sich zur Plasmabrennerspitze hin mit dem Winkel γ5 verjüngenden Abschnitt. Im Plasmabrennerschaft befinden sich beispielsweise die Anschlüsse für elektrische Leitungen für Strom und Spannung sowie Schläuche für Gase und Kühlmedien (hier ebenfalls nicht dargestellt). Die Figuren 2a und 2b zeigen Seitenansichten des Plasmaschneidbrenners 1, die um 90° um die durch die Düsenbohrung 4.1 verlaufende Längsachse M1 zueinander gedreht sind. Die Figur 2c und 2d zeigen die Ansicht auf die Plasmabrennerspitze 1.25 und die Figur 2e die Ansicht auf das Plasmabrennerende 1.35. Dabei wird als Plasmabrennerspitze 1.25, die Position des Plasmabrenners 1 bezeichnet, an dem der Plasmastrahl aus der Düsenbohrung 4.1 der Düse 4 heraustritt. Der Übersicht wegen, sind die Schläuche und Leitungen nicht dargestellt, diese würden am Plasmabrennerende 1.35 aus dem Plasmabrennerschaft 1.20 heraus geführt sein. Die auf die Plasmabrennerspitze 1.25 und/oder das Plasmabrennerende 1.35 gesehene äußere Kontur ist mit AK bezeichnet. Die äußere Kontur AK ist nicht kreisförmig und der Querschnitt ist nicht rotationssymmetrisch um die Längsachse M1.

In den Figuren 2c und 2d sind die Düsenkappe 5, die Spitze der Düse 4 mit der Düsenbohrung 4.1 erkennbar. Die Längsachse M1 ist die virtuelle Mittellinie, die senkrecht durch die Düsenbohrung 4.1 geführt ist.

In Figur 2c wird ein kleinster Abstand c, hier beispielhaft links bemaßt mit 14 mm, zwischen der äußeren Kontur AK und der durch den Mittelpunkt der Düsenbohrung 4.1 der Düse 4 verlaufenden Längsachse M1, gezeigt. Dieser kleinste Abstand c erstreckt sich über einen Winkelbereich α, hier beispielhaft 67°. In einem axial zur Düsenbohrung 4.1 nach rechts zur virtuellen Verbindungslinie, die auf der Hälfte (α/2) des Winkelbereiches α des kleinsten Abstandes c liegt, gedreht versetzten Bereich zwischen dem minimalen Winkel βₘᵢₙ von 60° und dem maximalen Winkel βₘₐₓ von 120°, wird ein radial zur Düsenbohrung 4.1 gerichteter größter Abstand d, hier beispielhaft rechts bemaßt mit 35 mm, zwischen der äußeren Kontur AK und der durch den Mittelpunkt der Düsenbohrung 4.1 der Düse 4 verlaufenden Längsachse M1 gezeigt.

Ebenso wird ein radial zur Düsenbohrung 4.1 gerichteter kleinster Abstand a (hier beispielhaft 2*c), hier beispielhaft 28 mm, zwischen zwei Punkten der äußeren Kontur AK gezeigt, dessen virtuelle gerade Verbindungslinie virtuell durch den Mittelpunkt der Düsenbohrung 4.1 der Düse 4 verläuft und die Längsachse M1 schneidet. Dieser kleinste Abstand a erstreckt sich über einen Winkelbereich α, der hier beispielhaft 67° beträgt. In einem axial zur Düsenbohrung 4.1 nach rechts zur virtuellen Verbindungslinie, die auf der Hälfte (α/2) des Winkelbereiches α des kleinsten Abstandes a liegt, gedreht versetzten Bereich zwischen dem minimalen Winkel βₘᵢₙ von 60° und dem maximalen Winkel βₘₐₓ von 120°, ist ein radial zur Düsenbohrung 4.1 gerichteter größter Abstand b, hier beispielhaft 70 mm, zwischen zwei Punkten der äußeren Kontur AK eingehalten, dessen virtuelle gerade Verbindungslinie, die durch den Mittelpunkt der Düsenbohrung 4.1 der Düse 4 verlaufende Längsachse M1 schneidet.

Der mit α bezeichnete Bereich ist in Figur 2c links dargestellt, er ist gleichermaßen auch, wie in Figur 2d gezeigt, auf der gegenüber liegenden rechten Seite des Plasmaschneidbrenners vorhanden und so dimensioniert. Ebenso kann der Winkelbereich zwischen dem minimalen Winkel βₘᵢₙ von 60° und dem maximalen Winkel βₘₐₓ von 120° nach links oder rechts, auch wie in Figur 2d gezeigt, versetzt sein.

Durch diese Bauform ist es im Gegensatz zum Plasmaschneidbrenner nach dem Stand der Technik (Figur 1a bis 1c) eine Bearbeitung mit vergleichbaren Schneidströmen von größer 200 A möglich und mehrere Plasmaschneidbrenner können mit einem möglichst geringen Abstand zwischen den Düsenbohrungen nebeneinander angeordnet werden.

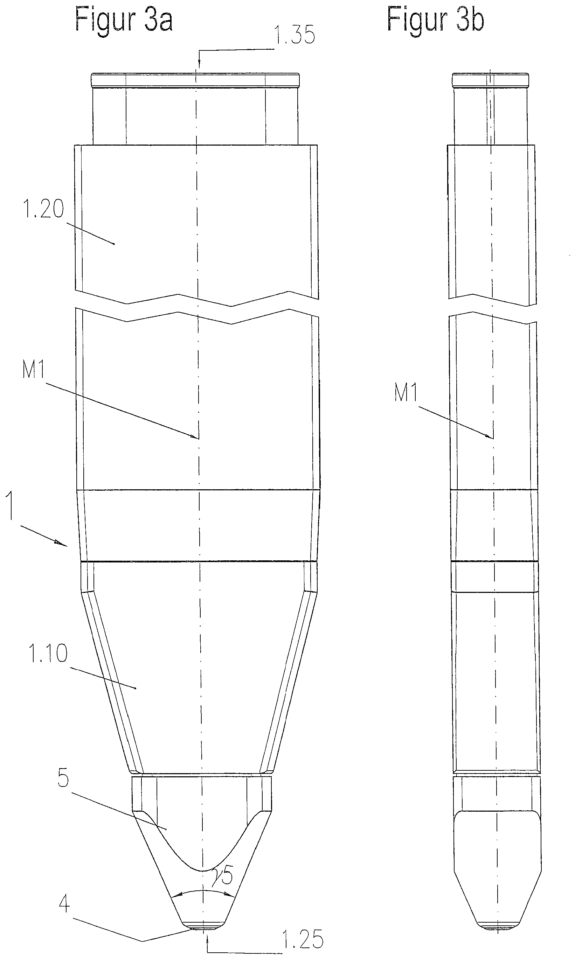

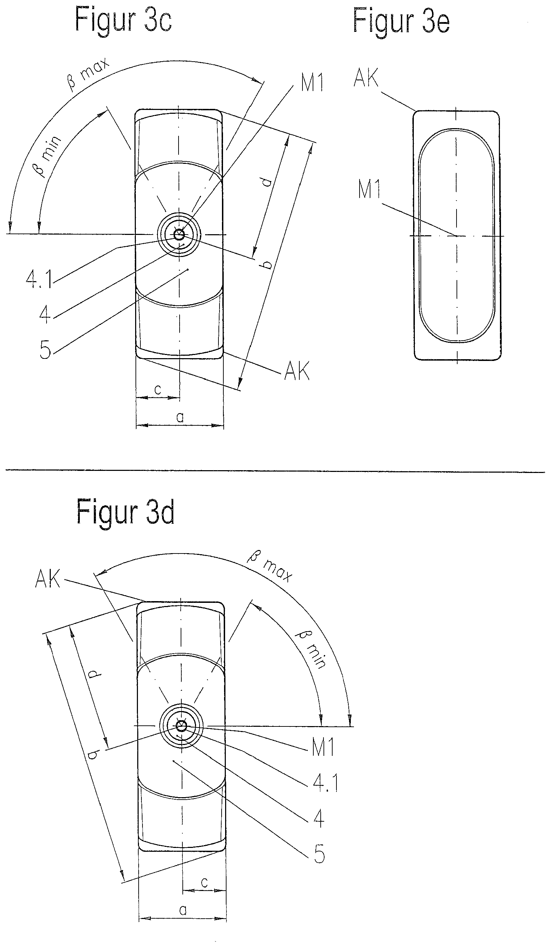

Die Figuren 3a bis 3d zeigen eine weitere Bauform eines erfindungsgemäßen Plasmasachneidbrenners 1, der sich von dem in den Figuren 2a bis 2d gezeigten vor allem darin unterscheidet, dass es keinen Winkelbereich α gibt, in dem der kleinste Abstand c und der kleinste Abstand a existieren. Es gibt hier auf der linken Seite des Plasmaschneidbrenners 1, wie in Figur 3c gezeigt, und auf der rechten Seite, wie in Figur 3d gezeigt, jeweils genau einen Anstand c und genau einen Abstand a.

Die Figuren 3a und 3b zeigen Seitenansichten des Plasmaschneidbrenners, die um 90° um die durch die Düsenbohrung 4.1 verlaufende Längsachse M1 zueinander gedreht sind. Die Figur 3c und 3d zeigen die Ansicht auf die Plasmabrennerspitze 1.25 und die Figur 2e die Ansicht auf das entgegengesetzt dazu angeordnete Plasmabrennerende 1.35. Dabei wird als Plasmabrennerspitze 1.25 die Position des Plasmaschneidbrenners 1 bezeichnet, an der der Plasmastrahl aus der Düsenbohrung 4.1 der Düse 4 heraustritt. Der Übersicht wegen sind die Schläuche und Leitungen nicht dargestellt, diese würden am Plasmabrennerende 1.35 aus dem Plasmabrennerschaft 1.20 heraus geführt sein. Die auf die Plasmabrennerspitze 1.25 und/oder das Plasmabrennerende 1.35 gesehene äußere Kontur ist mit AK bezeichnet. Die äußere Kontur AK ist nicht kreisförmig/rotationssymmetrisch um die Längsachse M1.

In den Figuren 3c und 3d sind die Düsenkappe 5, die Spitze der Düse 4 mit der Düsenbohrung 4.1 zu sehen. Die Längsachse M1 ist die virtuelle Mittellinie, die senkrecht durch die Düsenbohrung 4.1 verläuft.

In Figur 3c ist ein kleinster Abstand c, hier beispielhaft 12 mm, auf der linken Seite zwischen der äußeren Kontur AK und der durch den Mittelpunkt der Düsenbohrung 4.1 der Düse 4 verlaufenden Längsachse M1 dargestellt. In einem axial zur Düsenbohrung 4.1 nach rechts zur virtuellen Verbindungslinie des kleinsten Abstandes c gedreht versetzten Bereich zwischen dem minimalen Winkel βₘᵢₙ von 60° und dem maximalen Winkel βₘₐₓ von 120° ist ein radial zur Düsenbohrung 4.1 gerichteter größter Abstand d gezeigt, hier rechts und beispielhaft mit einer Länge von 35 mm, der zwischen der äußeren Kontur AK und der durch den Mittelpunkt der Düsenbohrung 4.1 der Düse 4 verlaufenden Längsachse M1 verläuft.

Ebenso ist ein radial zur Düsenbohrung 4.1 gerichteter kleinster Abstand a, hier beispielhaft 28 mm, zwischen zwei Punkten der äußeren Kontur AK gezeigt, deren virtuelle gerade Verbindungslinie die virtuelle durch den Mittelpunkt der Düsenbohrung 4.1 der Düse 4 verlaufende Längsachse M1 schneidet. In einem axial zur Düsenbohrung 4.1 nach rechts zur virtuellen Verbindungslinie des kleinsten Abstandes a gedreht versetzten Bereich zwischen dem minimalen Winkel βₘᵢₙ von 60° und dem maximalen Winkel βₘₐₓ von 120°, ist ein radial zur Düsenbohrung 4.1 gerichteter größter Abstand b, hier rechts und beispielhaft 70 mm, zwischen zwei Punkten der äußeren Kontur AK gezeigt, dessen virtuelle gerade Verbindungslinie, die durch den Mittelpunkt der Düsenbohrung 4.1 der Düse 4 verlaufende Längsachse M1 schneidet. In Figur 3d ist ein kleinster Abstand c, hier beispielhaft 12 mm, auf der rechten Seite zwischen der äußeren Kontur AK und der durch den Mittelpunkt der Düsenbohrung 4.1 der Düse 4 verlaufenden Längsachse M1 dargestellt. In einem axial zur Düsenbohrung 4.1 nach links zur virtuellen Verbindungslinie des kleinsten Abstandes c gedreht versetzten Bereich zwischen dem minimalen Winkel βₘᵢₙ von 60° und dem maximalen Winkel βₘₐₓ von 120° ist ein radial zur Düsenbohrung 4.1 gerichteter größter Abstand d gezeigt, hier links und beispielhaft 35 mm, der zwischen der äußeren Kontur AK und der durch den Mittelpunkt der Düsenbohrung 4.1 der Düse 4 verlaufenden Längsachse M1 verläuft.

Ebenso ist ein radial zur Düsenbohrung 4.1 gerichteter kleinster Abstand a, hier beispielhaft 28 mm, zwischen zwei Punkten der äußeren Kontur AK gezeigt, dessen virtuelle gerade Verbindungslinie, die virtuell durch den Mittelpunkt der Düsenbohrung 4.1 der Düse 4 verlaufende Längsachse M1 schneidet. In einem axial zur Düsenbohrung 4.1 nach links zur virtuellen Verbindungslinie des kleinsten Abstandes a gedreht versetzten Bereich zwischen dem minimalen Winkel βₘᵢₙ von 60° und dem maximalen Winkel βₘₐₓ von 120°, ist ein radial zur Düsenbohrung 4.1 gerichteter größter Abstand b, hier links und beispielhaft 70 mm, zwischen zwei Punkten der äußeren Kontur AK gezeigt, dessen virtuelle gerade Verbindungslinie, die durch den Mittelpunkt der Düsenbohrung 4.1 der Düse 4 verlaufende Längsachse M1 schneidet.

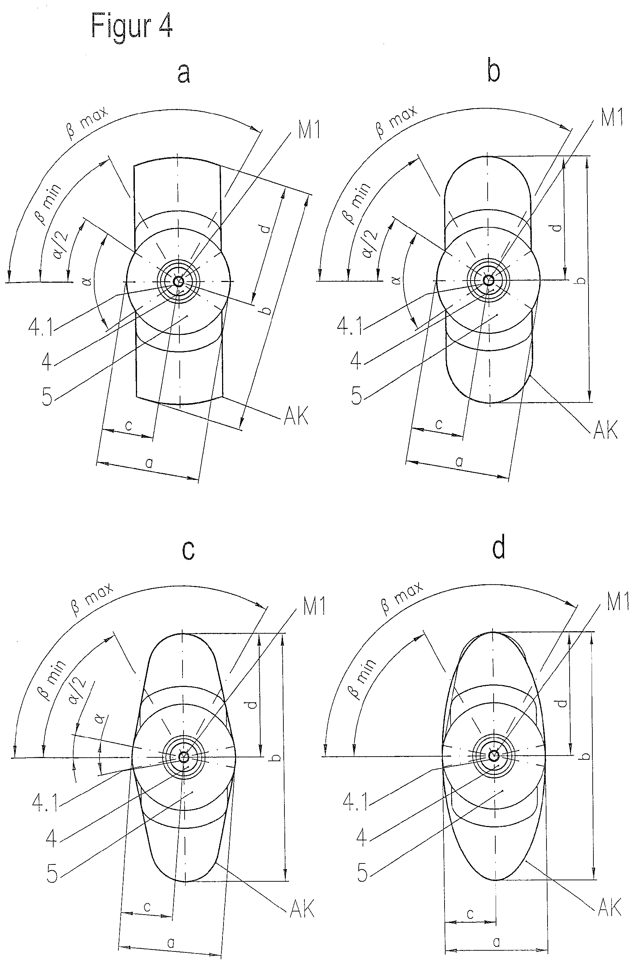

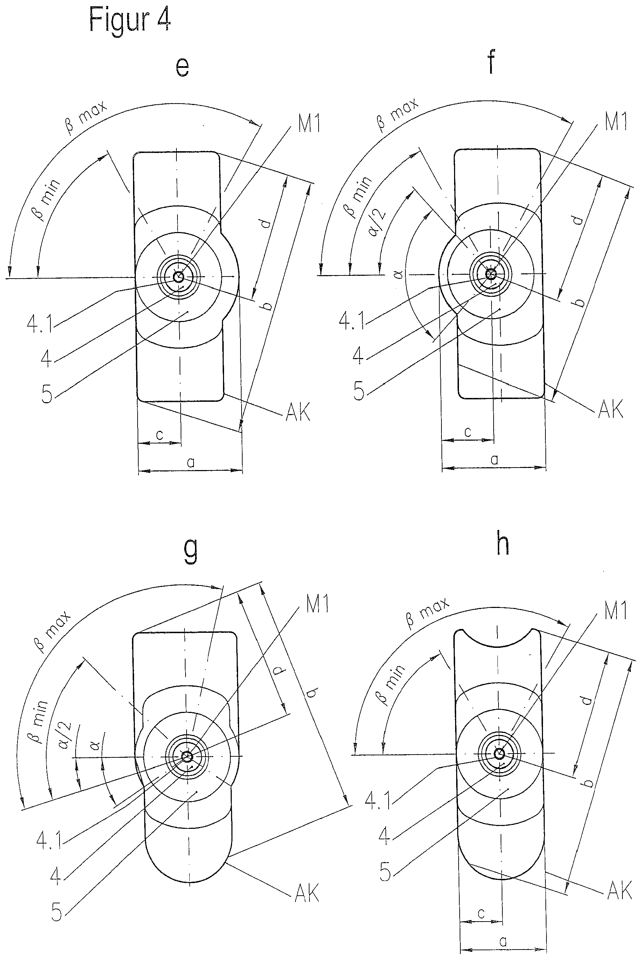

Die Figuren 4a bis 4h zeigen unterschiedliche Ausführungsbeispiele erfindungsgemäßer Plasmaschneidbrenner mit der Ansicht auf die Plasmabrennerspitze 1.25. Dabei sind die kleinsten Abstände c und a sowie die größten Abstände d und b beispielhaft angegeben. In den Figuren 4a, 4b, 4c, 4f, und 4f sind Beispiele gezeigt, in denen es einen oder mehrere Winkelbereiche α gibt, in denen die kleinsten Abstände c und a eingehalten sind. In den Figuren 4a und 4b beträgt α = 67°, in Figur 4c beträgt α = 23°, Figur 4f beträgt α 96°und in Figur 4g beträgt α = 33°.

In den Figuren 4a, 4b, 4c und 4g gibt es neben dem links von der Düsenbohrung 4.1 gezeigten Winkelbereich α einen zweiten genauso großen Winkelbereich α rechts von der Düsenbohrung 4.1. Dieser ist wegen der besseren Übersichtlichkeit nicht dargestellt, kann aber aus der Betrachtung der Figuren 2c und 2d hergeleitet werden.

In der Figur 4f gibt es den Winkelbereich α nur links von der Düsenbohrung 4.1, während rechts von der Düsenbohrung genau ein kleinster Abstand c aber kein Winkelbereich α eingehalten ist.

In den Figuren 4d und 4j ist links und rechts von der Düsenbohrung 4.1 jeweils genau ein kleinster Abstand c eingehalten. Der Winkelbereich α existiert nicht oder beträgt 0°.

In der Figur 4e ist nur ein kleinster Abstand c links von der Düsenbohrung 4.1 eingehalten.

Ebenso sind beispielhaft unsymmetrische Ausführungsformen in den Figuren 4e, 4f, 4g und 4h gezeigt.

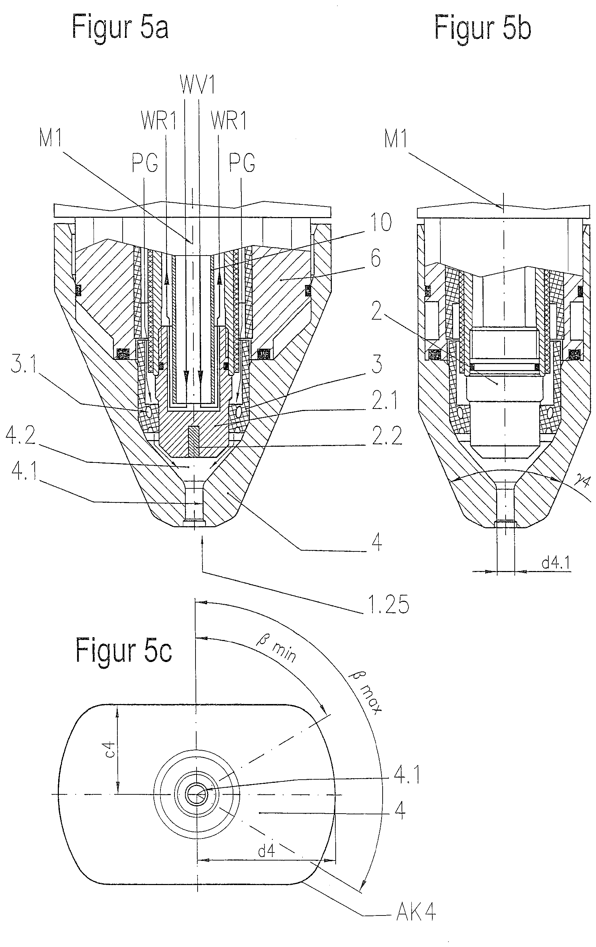

Die Figuren 5a bis 5c zeigen beispielhaft eine Anordnung bestehend aus einer Elektrode 2, einer Düse 4 und einer Gasführung 3, die zwischen der Elektrode 2 und der Düse 4 angeordnet ist. Die Figuren 5a und 5b zeigen Schnittdarstellungen der Seitenansichten des Plasmaschneidbrenners 1, die um 90° um die durch die Düsenbohrung 4.1 verlaufende Längsachse M1 zueinander gedreht sind.

Das Plasmagas PG strömt durch die Bohrungen 3.1 der Gasführung 3 in den Innenraum 4.2 zwischen Elektrode 2 und Düse 4 und tritt aus der Düsenbohrung 4.1 aus.

Die Düse 4 ist an der Düsenhalterung 6 befestigt. Zur Düsenspitze in Richtung zur Düsenbohrung 4.1 hin, hat die Düse 4 einen sich unter dem Winkel γ4, hier beispielhaft 48°, sich konisch verjüngenden Abschnitt.

Die Elektrode 2 ist direkt flüssigkeitsgekühlt, das bedeutet, sie steht direkt mit einer Kühlflüssigkeit, im einfachsten Fall Wasser, durch Berührung in Kontakt. Die Kühlmittelflüssigkeit strömt durch das Kühlrohr 10 in den Innenraum der Elektrode 2 (Kühlmittelvorlauf WV1) und durch den Zwischenraum zwischen Kühlrohr 10 und Elektrode 2 wieder zurück (Kühlmittelrücklauf WR1). Die Elektrode 2 besteht hier aus dem Emissionseinsatz 2.2 und einem Elektrodenhalter 2.1. Der Emissionseinsatz 2.2 besteht aus einem hochschmelzenden Material, z. B. Hafnium, Wolfram oder einer Legierung davon und der Elektrodenhalter 2.1 ist aus einem gut wärmeleitenden Material, z. B. Kupfer, Silber oder Legierungen davon gebildet. Dies sichert eine effektive Kühlung der Elektrode 2.

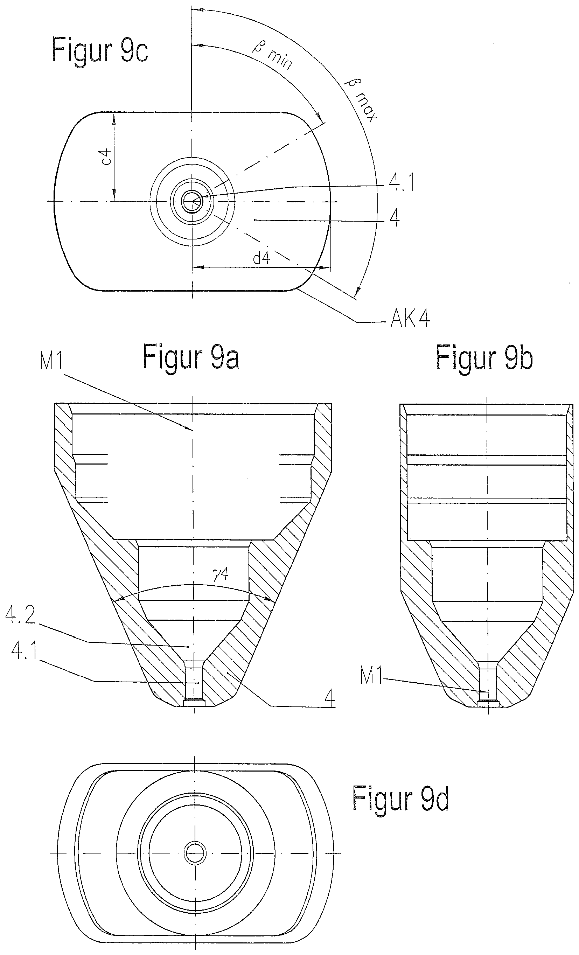

Die Figur 5c zeigt die Ansicht auf die Düsenspitze mit der Düsenbohrung 4.1. Ist die Anordnung in den Plasmaschneidbrenner 1 eingebaut, würde diese der Plasmabrennerspitze 1.25 entsprechen. Hier ist aus Richtung der Düsenbohrung 4.1 eine äußere Kontur AK4 der Anordnung gezeigt, die mit der äußeren Kontur AK4 der Düse 4 gemäß Figur 9c identisch ist.

Es ist oberhalb und unterhalb der Düsenbohrung 4.1 jeweils genau ein radial zur Düsenbohrung 4.1 gerichteter kleinster Abstand c4 eingehalten. Dies bedeutet, dass bei diesem Beispiel einer Anordnung genau zwei radial zur Düsenbohrung 4.1 gerichtete kleinste Abstände c4 zwischen der durch den Mittelpunkt der Düsenbohrung 4.1 der Düse 4 verlaufenden Längsachse M1 und der äußeren Kontur AK4 eingehalten sind.

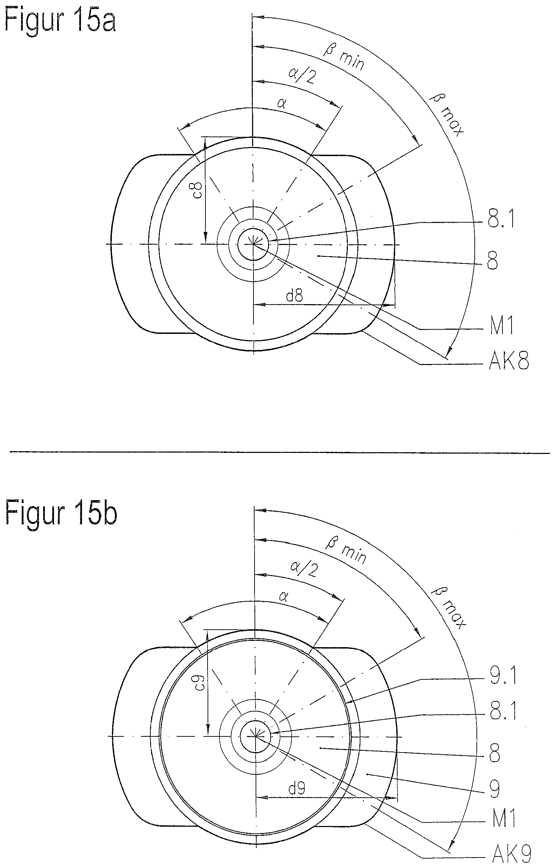

Ein Winkelbereich α existiert in diesem Ausführungsbeispiel nicht oder er beträgt 0°. Es ist aber auch möglich, dass die Außenkontur AK der Anordnung so ausgebildet ist, dass sich der kleinste Anstand c4 in einem Winkelbereich α von maximal 120° oder aber besser von maximal 70° erstreckt. Es ist ebenso möglich, dass die Anordnung lediglich einen radial zur Düsenbohrung 4.1 gerichteten kleinsten Abstand c4 in eine Richtung aufweist. Auf eine bildliche Darstellung wurde hier verzichtet, sie kann aber aus den Beispielen der Figuren 4a bis 4j und 15a bis 15d hergeleitet werden.

Die äußere Kontur AK4 weist in dem axial zur Düsenbohrung 4.1 nach rechts oder links zur virtuellen Verbindungslinie des kleinsten Abstandes c4 zwischen dem minimalen Winkel βₘᵢₙ von 60° und dem maximalen Winkel βₘₐₓ von 120° gedrehten Winkelbereich zumindest einen radial zur Düsenbohrung 4.1 gerichteten größten Abstand d4 zwischen der durch den Mittelpunkt der Düsenbohrung 4.1 der Düse 4 verlaufenden Längsachse M1 und der äußeren Kontur AK4 auf. Dargestellt ist der nach rechts um βₘᵢₙ bis βₘₐₓ gedrehte Winkelbereich.

Der kleinste Abstand c4 beträgt hier beispielhaft 12 mm und der größte Abstand d4 beispielhaft 19 mm. Damit beträgt der kleinste Abstand c4 weniger als 2/3 des größten Abstandes d4.

Die Düsenbohrung hat hier einen minimalen Durchmesser d4.1 von 2,4 mm und ist für das Schneiden von Strömen von mindestens 200 A oder sogar grö-ßer 250 A geeignet.

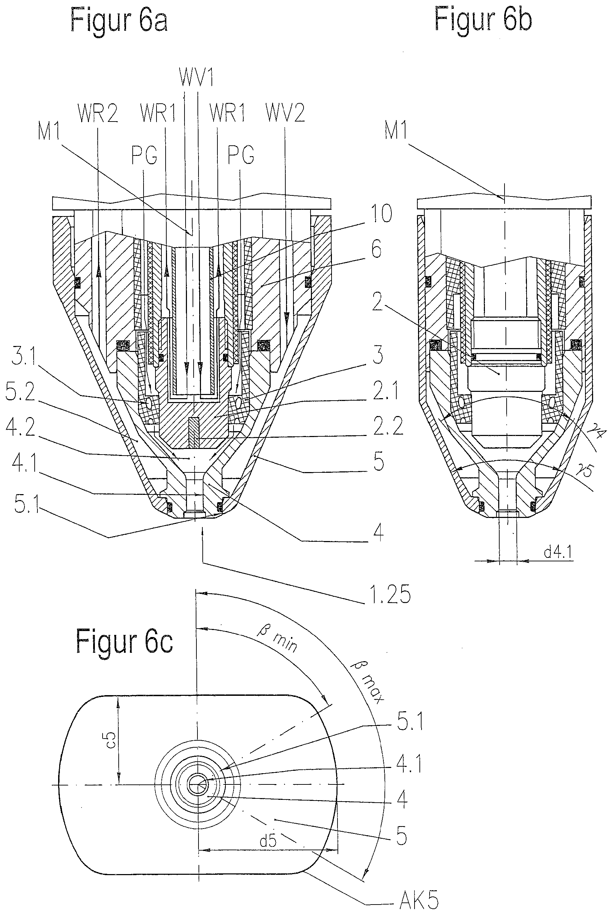

Die Figuren 6a bis 6c zeigen beispielhaft eine Anordnung bestehend aus einer Elektrode 2, einer Düse 4, einer Gasführung 3, die zwischen der Elektrode 2 und der Düse 4 angeordnet ist sowie einer Düsenkappe 5. Die Figuren 6a und 6b zeigen Schnittdarstellungen der Seitenansichten des Plasmaschneidbrenners 1, die um 90° um die durch die Düsenbohrung 4.1 verlaufende Längsachse M1 zueinander gedreht sind. Der Aufbau und die Funktion entsprechen dem, des in den Figuren 5a-c beschriebenen Beispiels, so dass auf eine detaillierte Beschreibung verzichtet werden kann. Gleiche Elemente sind mit den gleichen Bezugszeichen gekennzeichnet.

Zur Düsenspitze in Richtung zur Düsenbohrung 4.1 hin hat die Außenfläche der Düse 4 einen sich unter dem Winkel γ4, hier beispielhaft 80°, konisch verjüngenden Abschnitt.

Zur Düsenkappenspitze in Richtung der Düsenkappenbohrung 5.1 hat die Außenfläche der Düsenkappe 5 einen sich unter dem Winkel γ5, hier beispielhaft 48°, konisch verjüngenden Abschnitt.

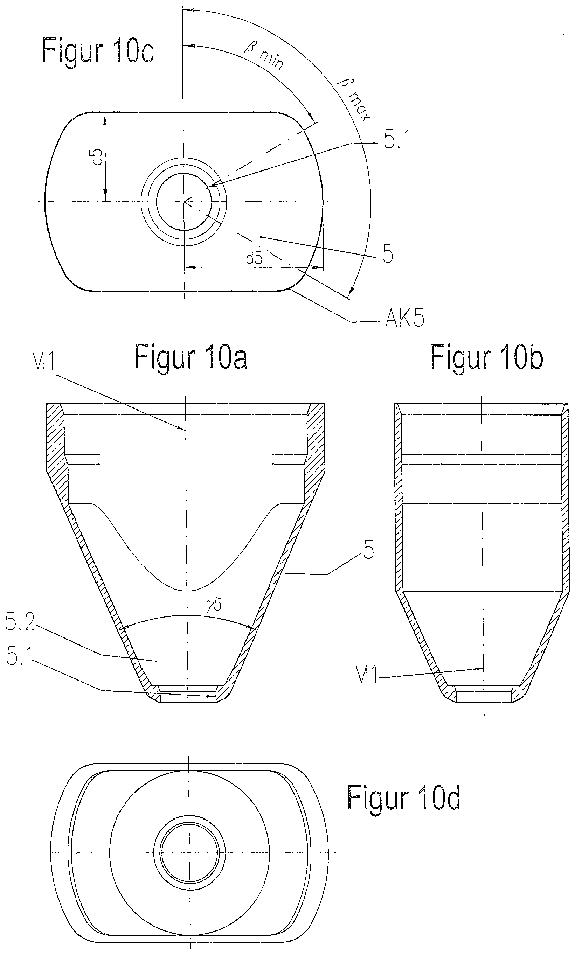

Die Figur 6c zeigt die Ansicht auf die Düsenspitze mit der Düsenbohrung 4.1 und die Düsenkappenspitze mit der Düsenkappenbohrung 5.1. Ist die Anordnung in den Plasmaschneidbrenner 1 eingebaut, würde diese der Plasmabrennerspitze 1.25 entsprechen. Hier ist aus Richtung der Düsenkappenbohrung 5.1 eine äußere Kontur AK5 der Anordnung gezeigt, die mit der äußeren Kontur der Düsenkappe 5 aus Figur 10c identisch ist.

Da in dieser beispielhaften Anordnung die Mittelpunkte der Düsenbohrung 4.1 und der Düsenkappenbohrung 5.1 übereinstimmen, wird nur auf den Mittelpunkt der Düsenbohrung 4.1 und die Längsachse M1 Bezug genommen.

Es ist oberhalb und unterhalb der Düsenbohrung 4.1 jeweils genau ein radial zur Düsenbohrung 4.1 gerichteter kleinster Abstand c5 eingehalten. Dies bedeutet, dass in diesem Beispiel die Anordnung genau zwei radial zur Düsenbohrung 4.1 gerichtete kleinste Abstände c5 zwischen der durch den Mittelpunkt der Düsenbohrung 4.1 der Düse 4 verlaufenden Längsachse M1 und der äußeren Kontur AK5 eingehalten sind.

Ein Winkelbereich α existiert in diesem Ausführungsbeispiel nicht oder er beträgt 0°. Es ist aber auch möglich, dass die Außenkontur AK der Anordnung so ausgebildet ist, dass sich der kleinste Anstand c5 in einem Winkelbereich α von maximal 120° oder aber besser von maximal 70° erstreckt. Es ist ebenso möglich, dass bei der Anordnung genau ein radial zur Düsenbohrung 4.1 gerichteter kleinster Abstand c5 zwischen der durch den Mittelpunkt der Düsenbohrung 4.1 der Düse 4 verlaufenden Längsachse M1 eingehalten ist. Auf eine bildliche Darstellung wurde hier verzichtet, sie kann aber aus den Beispielen der Figuren 4a bis 4j und 15a bis 15d hergeleitet werden.

Die äußere Kontur AK5 weist in dem axial zur Düsenbohrung 4.1 nach rechts oder links zur virtuellen Verbindungslinie des kleinsten Abstandes c5 zwischen dem minimalen Winkel βₘᵢₙ von 60° und dem maximalen Winkel βₘₐₓ von 120° gedrehten Winkelbereich zumindest einen radial zur Düsenbohrung 4.1 gerichteten größten Abstand d5 zwischen der durch den Mittelpunkt der Düsenbohrung 4.1 der Düse 4 verlaufenden Längsachse M1 und der äußeren Kontur AK5 auf. Dargestellt ist der nach rechts um βₘᵢₙ bis βₘₐₓ gedrehte Winkelbereich.

Der kleinste Abstand c5 beträgt hier beispielhaft 12 mm und der größte Anstand d5 beispielhaft 19 mm. Damit beträgt der kleinste Abstand c5 weniger als 2/3 des größten Abstandes d5.

Die Düsenbohrung hat hier einen minimalen Durchmesser d4.1 von 2,4 mm und ist für das Schneiden mit Strömen von mindestens 200 A oder sogar größer 250 A geeignet.

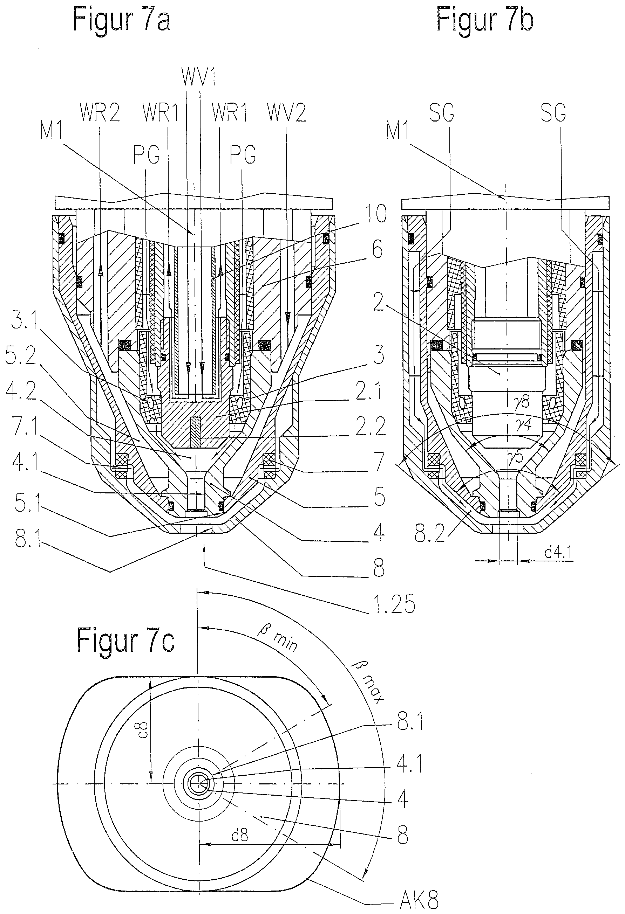

Die Figuren 7a bis 7c zeigen beispielhaft eine Anordnung bestehend aus einer Elektrode 2, einer Düse 4, einer Gasführung 3, die zwischen der Elektrode 2 und der Düse 4 angeordnet ist, einer Düsenkappe 5, einer Düsenschutzkappe 8 und einer Gasführung 7, die zwischen der Düsenkappe 5 und der Düsenschutzkappe 8 angeordnet ist. Die Figuren 7a und 7b zeigen Schnittdarstellungen der Seitenansichten des Plasmaschneidbrenners 1, die um 90° um die durch die Düsenbohrung 4.1 verlaufende Längsachse M1 zueinander gedreht sind.

Das Plasmagas PG strömt durch die Bohrungen 3.1 der Gasführung 3 in den Raum 4.2 zwischen Elektrode 2 und Düse 4 und tritt aus der Düsenbohrung 4.1 und danach aus der Düsenschutzkappenbohrung 8.1 aus.

Das Sekundärgas SG strömt durch die Bohrungen 7.1 der Gasführung 7 in den Raum 8.2 zwischen der Düsenkappe 5 und der Düsenschutzkappe 8 und tritt aus der Düsenschutzkappenbohrung 8.1 aus

Die Düse 4 ist mit Hilfe der Düsenkappe 5 an der Düsenhalterung 6 befestigt.

Die Düsenschutzkappe 8 ist hier beispielhaft an der Düsenkappe 5 befestigt. Es ist auch möglich, dass die Düsenschutzkappe 8 am Brennerkörper 10.1, am Düsenhalter 6 oder einem anderen Teil des Plasmaschneidbrenners 1 befestigt ist. In der Regel erfolgt eine Befestigung, die eine elektrische Isolation der Düsenschutzkappe 8 gegenüber der Düse 4 ermöglicht.

Zur Düsenspitze in Richtung zur Düsenbohrung 4.1 hin, weist die Außenfläche der Düse 4 einen sich unter dem Winkel γ4, hier beispielhaft 80°, konisch verjüngenden Abschnitt auf.

Zur Düsenkappenspitze in Richtung der Düsenkappenbohrung 5.1 weist die Außenfläche der Düsenkappe 5 einen sich unter dem Winkel γ5, hier beispielhaft 100°, konisch verjüngenden Abschnitt auf.

Zur Düsenschutzkappenspitze in Richtung der Düsenschutzkappenbohrung 8.1 weist die Außenfläche der Düsenschutzkappe 8 einen sich unter dem Winkel γ8, hier beispielhaft 100°, konisch verjüngenden Abschnitt auf.

Ansonsten entspricht die Ausführung bei diesem Beispiel, den in den Figuren 5a-c und 6a-c gezeigten Beispielen.

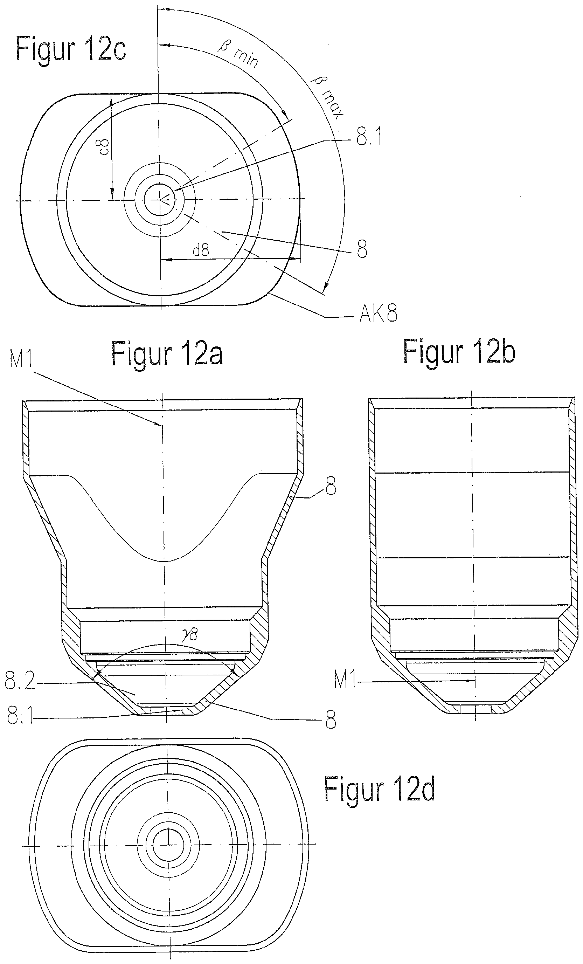

Die Figur 7c zeigt die Ansicht auf die Düsenschutzkappenspitze mit der Düsenschutzkappenbohrung 8.1 und darin sichtbar die Düsenspitze mit der Düsenbohrung 4.1. Ist die Anordnung in den Plasmaschneidbrenner 1 eingebaut, würde diese der Plasmabrennerspitze 1.25 entsprechen. Hier ist aus Richtung der Düsenschutzkappenbohrung 8.1 eine äußere Kontur AK8 der Anordnung gezeigt, die mit der äußeren Kontur AK8 der Düsenschutzkappe 8 aus Figur 12c identisch ist.

Da in dieser beispielhaften Anordnung die Mittelpunkte der Düsenbohrung 4.1 und der Düsenkappenbohrung 5.1 und der Düsenschutzkappenbohrung 8.1 übereinstimmen, wird nur auf den Mittelpunkt der Düsenbohrung 4.1 und die Längsachse M1 Bezug genommen.

Es ist oberhalb und unterhalb der Düsenbohrung 4.1 jeweils genau ein radial zur Düsenbohrung 4.1 gerichteter kleinster Abstand c8 eingehalten. Dies bedeutet, dass in diesem Beispiel die Anordnung genau zwei radial zur Düsenbohrung 4.1 gerichtete kleinste Abstände c8 zwischen der durch den Mittelpunkt der Düsenbohrung 4.1 der Düse 4 verlaufenden Längsachse M1 und der äußeren Kontur AK8 eingehalten sind.

Ein Winkelbereich α existiert in diesem Ausführungsbeispiel nicht oder er beträgt 0°. Es ist aber auch möglich, dass die Außenkontur der Anordnung so ausgebildet ist, dass sich der kleinste Anstand c8 in einem Winkelbereich α von maximal 120° oder aber besser von maximal 70° erstreckt. Es ist ebenso möglich, dass bei der Anordnung lediglich ein radial zur Düsenbohrung 4.1 gerichteter kleinster Abstand c8 in eine Richtung eingehalten ist. Auf eine bildliche Darstellung wurde hier verzichtet, sie kann aber aus den Beispielen der Figuren 4a bis 4j und 15a bis 15d hergeleitet werden.

Die äußere Kontur AK8 weist in dem axial zur Düsenbohrung 4.1 nach rechts oder links zur virtuellen Verbindungslinie des kleinsten Abstandes c8 zwischen dem minimalen Winkel βₘᵢₙ von 60° und dem maximalen Winkel βₘₐₓ von 120° gedrehten Winkelbereich zumindest einen radial zur Düsenbohrung 4.1 gerichteten größten Abstand d8 zwischen der durch den Mittelpunkt der Düsenbohrung 4.1 der Düse 4 verlaufenden Längsachse M1 und der äußeren Kontur AK8 auf. Dargestellt ist der nach rechts um βₘᵢₙ bis βₘₐₓ gedrehte Winkelbereich.

Der kleinste Abstand c8 beträgt hier beispielhaft 14 mm und der größte Anstand d8 beispielhaft 19 mm. Damit beträgt der kleinste Abstand c8 weniger als 3/4 des größten Abstandes d8.

Die Düsenbohrung 4.1 hat hier einen minimalen Durchmesser d4.1 von 2,4 mm und ist für das Schneiden von Strömen von mindestens 200 A oder sogar größer 250 A geeignet.

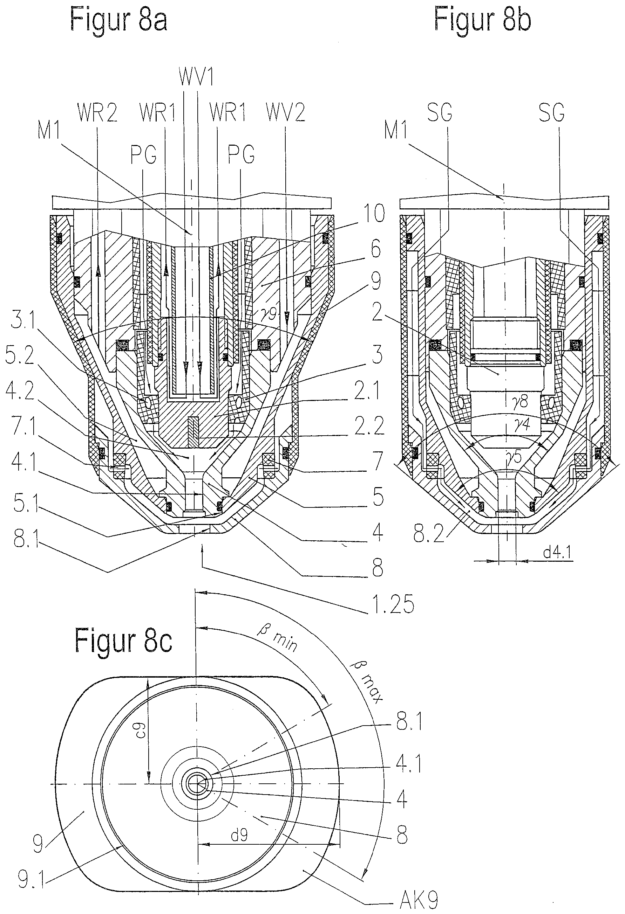

Die Figuren 8a bis 8c zeigen beispielhaft eine Anordnung bestehend aus einer Elektrode 2, einer Düse 4, einer Gasführung, die zwischen der Elektrode 2 und der Düse 4 angeordnet ist, einer Düsenkappe 5, einer Düsenschutzkappe 8 und einer Gasführung 7, die zwischen der Düsenkappe 5 und der Düsenschutzkappe 8 angeordnet ist, sowie eine Düsenschutzkappenhalterung 9.

Der Unterschied zu den Figuren 7a bis 7c besteht darin, dass die Düsenschutzkappe 8 von einer Düsenschutzkappenhalterung 9 gehalten wird. Die Düsenschutzkappenhalterung 9 ist wie die Düsenschutzkappe 8 aus Figur 7a bis c an der Düsenkappe 5 oder am Brennerkörper 1.10, am Düsenhalter 6 oder einem anderen Teil des Plasmaschneidbrenners 1 befestigt.

Die Figuren 8a und 8b zeigen Schnittdarstellungen der Seitenansichten des Plasmaschneidbrenners 1, die um 90° um die durch die Düsenbohrung 4.1 verlaufende Längsachse M1 zueinander gedreht sind.

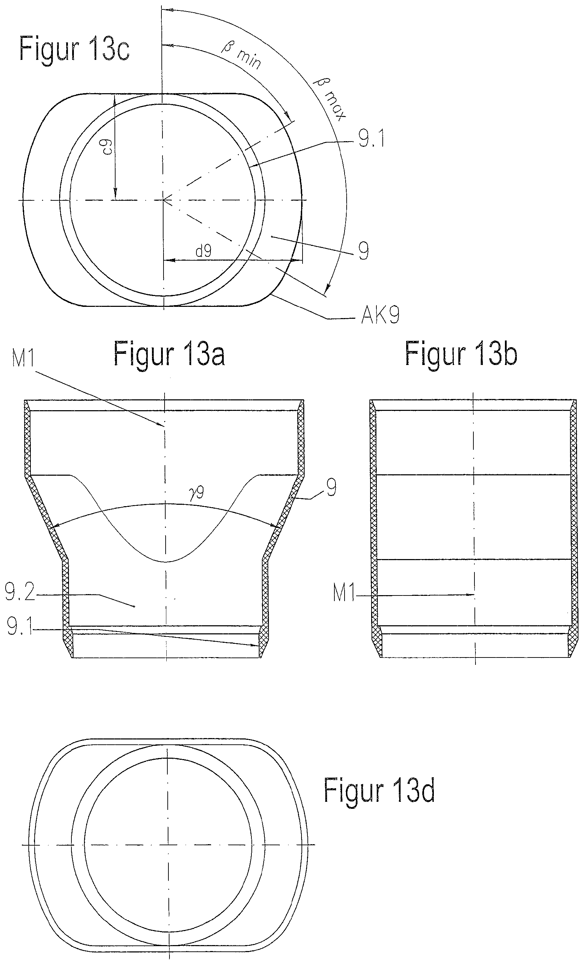

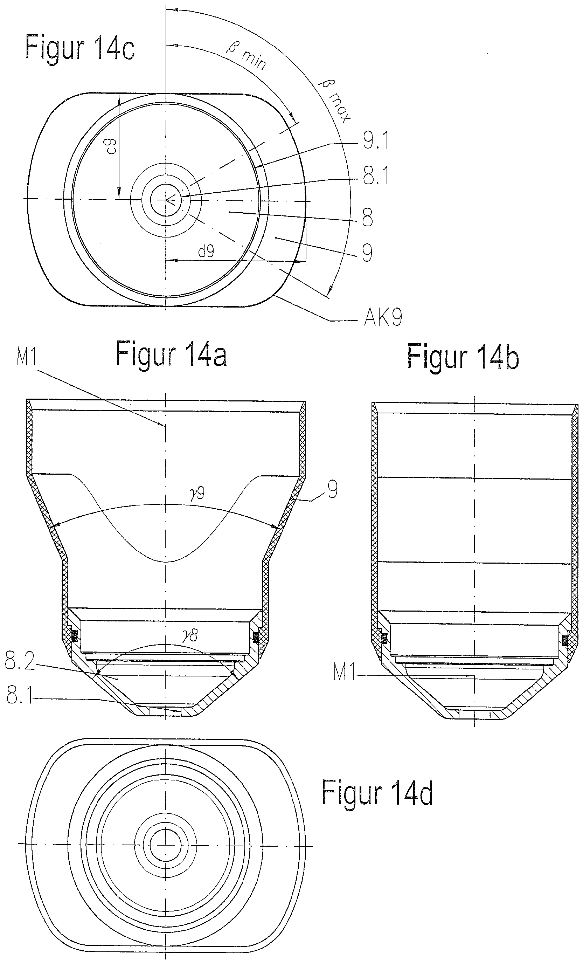

Die Figur 8c zeigt die Ansicht auf die Düsenschutzkappenspitze mit der Düsenschutzkappenbohrung 8.1 und darin sichtbar die Düsenspitze mit der Düsenbohrung 4.1. Ist die Anordnung in den Plasmaschneidbrenner 1 eingebaut, würde diese der Plasmabrennerspitze 1.25 entsprechen. Hier ist aus Richtung der Düsenschutzkappenbohrung 8.1 eine äußere Kontur AK9 der Anordnung gezeigt, die mit der äußeren Kontur der Düsenschutzkappenhalterung 9 aus Figur 13c und der Anordnung aus der Figur 14c identisch ist.

Ansonsten gelten die unter den Figuren 7a bis 7c gemachten Aussagen, jedoch mit dem Unterschied, dass anstelle der äußeren Kontur AK8 der Düsenschutzkappe 8 die äußere Kontur AK9 der Düsenschutzkappenhalterung 9 tritt. Damit verbunden ist auch, dass an die Stelle des kleinsten Abstands c8 der kleinste Abstand c9 und dass an die Stelle des größten Abstandes d8 der größte Abstand d9 treten.

Die Figuren 9a bis 9d zeigen eine erfindungsgemäße Düse 4, die in eine Anordnung nach den Figuren 5a bis 5c eingebaut ist. Die Figuren 9a und 9b zeigen Schnittdarstellungen der Seitenansichten der Düse 4, die um 90° um die durch die Düsenbohrung 4.1 verlaufende Längsachse M1 zueinander gedreht sind. Zur Düsenspitze in Richtung der Düsenbohrung 4.1 weisend, hat die Düse 4 einen sich unter dem Winkel γ4, hier beispielhaft 48°, sich konisch verjüngenden Abschnitt.

Die Figur 9c zeigt die Ansicht auf die Düsenspitze mit der Düsenbohrung 4.1 und es ist die äußere Kontur AK4 der Düse 4 erkennbar. Ist die Düse 4 in den Plasmaschneidbrenner 1 eingebaut, würde diese der Plasmabrennerspitze 1.25 entsprechen.

Es ist oberhalb und unterhalb der Düsenbohrung 4.1 jeweils genau ein radial zur Düsenbohrung 4.1 gerichteter kleinster Abstand c4 eingehalten. Dies bedeutet, dass in diesem Beispiel die Anordnung genau zwei radial zur Düsenbohrung 4.1 gerichtete kleinste Abstände c4 zwischen der durch den Mittelpunkt der Düsenbohrung 4.1 der Düse 4 verlaufenden Längsachse M1 und der äußeren Kontur AK4 aufweist.

Ein Winkelbereich α existiert in diesem Ausführungsbeispiel nicht oder er beträgt 0°. Es ist aber auch möglich, dass die äußere Kontur AK4 so ausgebildet ist, dass sich der kleinste Abstand c4 in einem Winkelbereich α von maximal 120° oder bevorzugt von maximal 70° erstreckt. Es ist ebenso möglich, dass die Düse 4 genau ein radial zur Düsenbohrung 4.1 gerichteter kleinster Abstand c4 eingehalten ist. Auf eine bildliche Darstellung wurde hier verzichtet, sie kann aber aus den Beispielen der Figuren 4a bis 4j und Figuren 15a bis 15d hergeleitet werden.

Die äußere Kontur AK4 weist in dem axial zur Düsenbohrung 4.1 nach rechts oder links zur virtuellen Verbindungslinie des kleinsten Abstandes c4 zwischen dem minimalen Winkel βₘᵢₙ von 60° und dem maximalen Winkel βₘₐₓ von 120° gedrehten Winkelbereich zumindest einen radial zur Düsenbohrung 4.1 gerichteten größten Abstand d4 zwischen der durch den Mittelpunkt der Düsenbohrung 4.1 der Düse 4 verlaufenden Längsachse M1 und der äußeren Kontur AK4 auf. Dargestellt ist der nach rechts um βₘᵢₙ bis βₘₐₓ gedrehte Winkelbereich.

Der kleinste Abstand c4 beträgt hier beispielhaft 12 mm und der größte Anstand d4 beispielhaft 19 mm. Damit beträgt der kleinste Abstand c4 weniger als 2/3 des größten Abstandes d4.

Die Figur 9d zeigt die zu Figur 9c entgegengesetzte Ansicht auf das von Düsenspitze und der Düsenbohrung 4.1 entgegengesetzte Ende der Düse 4.

Die äußere Kontur AK4 der Düse 4 ist nicht kreisförmig/rotationssymmetrisch um die Längsachse M1.

Die Düsenbohrung hat hier einen minimalen Durchmesser d4.1 von 2,4 mm und ist für das Schneiden von Strömen von mindestens 200 A oder sogar grö-ßer 250 A geeignet.

Die Figuren 10a bis 10d zeigen eine erfindungsgemäße Düsenkappe 5, die in eine Anordnung nach den Figuren 6a bis 6c eingebaut ist. Die Figuren 10a und 10b zeigen Schnittdarstellungen der Seitenansichten der Düsenkappe 5, die um 90° um die durch die Düsenkappenbohrung 5.1 verlaufende Längsachse M1 zueinander gedreht sind. Zur Düsenkappenspitze in Richtung zur Düsenkappenbohrung 5.1 weisend, hat die Düsenkappe 5 einen sich unter dem Winkel γ5, hier beispielhaft 48°, konisch verjüngenden Abschnitt.

Die Figur 10c zeigt die Ansicht auf die Düsenkappenspitze mit der Düsenkappenbohrung 5.1 und es ist die äußere Kontur AK5 der Düsenkappe 5 zu sehen. Ist die Düsenkappe 5 in den Plasmaschneidbrenner 1 eingebaut, würde diese der Plasmabrennerspitze 1.25 entsprechen.

Es ist oberhalb und unterhalb der Düsenkappenbohrung 5.1 jeweils genau ein radial zur Düsenkappenbohrung 5.1 gerichteter kleinster Abstand c5 eingehalten. Dies bedeutet, dass bei diesem Beispiel genau zwei radial zur Düsenkappenbohrung 5.1 gerichtete kleinste Abstände c5 zwischen der durch den Mittelpunkt der Düsenkappenbohrung 5.1 der Düsenkappe 5 verlaufenden Längsachse M1 und der äußeren Kontur AK5 eingehalten sind.

Ein Winkelbereich α existiert in diesem Ausführungsbeispiel nicht oder er beträgt 0°. Es ist aber auch möglich, dass die äußere Kontur AK5 so ausgebildet ist, dass der kleinste Abstand c5 in einem Winkelbereich α von maximal 120° oder aber besser von maximal 70° eingehalten ist. Es ist ebenso möglich, dass die Düsenkappe 5 genau einen radial zur Düsenkappenbohrung 5.1 gerichteten kleinsten Abstand c5 in eine Richtung aufweist. Auf eine bildliche Darstellung wurde hier verzichtet, sie kann aber analog zu den Figuren 4a bis 4j und Figuren 15a bis 15d hergeleitet werden.

Die äußere Kontur AK5 weist in dem axial zur Düsenkappenbohrung 5.1 nach rechts oder links zur virtuellen Verbindungslinie des kleinsten Abstandes c5 zwischen dem minimalen Winkel βₘᵢₙ von 60° und dem maximalen Winkel βₘₐₓ von 120° gedrehten Winkelbereich zumindest einen radial zur Düsenkappenbohrung 5.1 gerichteten größten Abstand d5 zwischen der durch den Mittelpunkt der Düsenkappenbohrung 5.1 der Düsenkappe 5 verlaufenden Längsachse M1 und der äußeren Kontur AK5 auf. Dargestellt ist der nach rechts um βₘᵢₙ bis βₘₐₓ gedrehte Winkelbereich.

Der kleinste Abstand c5 beträgt hier beispielhaft 12 mm und der größte Anstand d5 beispielhaft 19 mm. Damit beträgt der kleinste Abstand c5 weniger als 2/3 des größten Abstandes d5.

Die Figur 10d zeigt die zu Figur 10c entgegengesetzte Ansicht auf das von der Düsenkappenspitze und der Düsenkappenbohrung 5.1 entgegengesetzte Ende der Düsenkappe 5.

Die äußere Kontur AK5 der Düsenkappe 5 ist nicht kreisförmig/rotationssymmetrisch um die Längsachse M1.

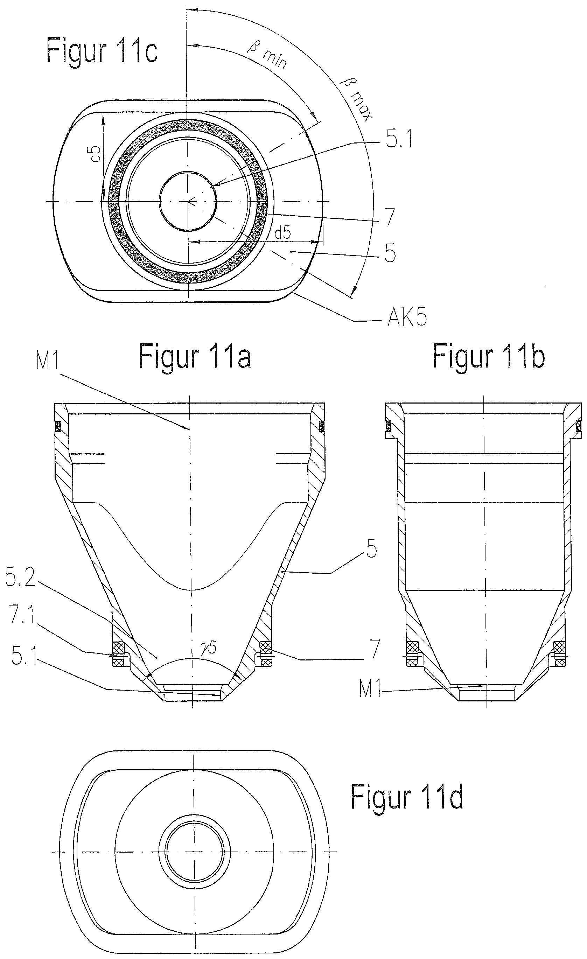

Die Figuren 11a bis 11d zeigen eine erfindungsgemäße Anordnung mit einer Düsenkappe 5 und einer Gasführung 7, die in eine Anordnung nach den Figuren 7a bis 7c und 8a bis 8c eingebaut sein kann. Die Figuren 11a und 11b zeigen Schnittdarstellungen der Seitenansichten der Düsenkappe 5, die um 90° um die durch die Düsenkappenbohrung 5.1 verlaufende Längsachse M1 zueinander gedreht sind. Zur Düsenkappenspitze in Richtung zur Düsenkappenbohrung 5.1 weisend, weist die Düsenkappe 5 einen sich unter dem Winkel γ5, hier beispielhaft 100°, konisch verjüngenden Abschnitt auf.

Die Figur 11c zeigt die Ansicht auf die Düsenkappenspitze mit der Düsenkappenbohrung 5.1 und es ist die äußere Kontur AK5 der Düsenkappe 5 zu sehen. Ist die Düsenkappe 5 in den Plasmaschneidbrenner 1 eingebaut, würde diese in Richtung der Plasmabrennerspitze 1.25 hinter der Düsenschutzkappe 8, wie in den Figuren 7a bis 7c und 8a bis 8c gezeigt, angeordnet sein.

Es ist oberhalb und unterhalb der Düsenkappenbohrung 5.1 jeweils genau ein radial zur Düsenkappenbohrung 5.1 gerichteter kleinster Abstand c5 eingehalten. Dies bedeutet, dass in diesem Beispiel die Anordnung genau zwei radial zur Düsenkappenbohrung 5.1 gerichtete kleinste Abstände c5 zwischen der durch den Mittelpunkt der Düsenkappenbohrung 5.1 der Düsenkappe 5 verlaufenden Längsachse M1 und der äußeren Kontur AK5 aufweist.

Ein Winkelbereich α existiert in diesem Ausführungsbeispiel nicht oder er beträgt 0°. Es ist aber auch möglich, dass die äußere Kontur AK5 so ausgebildet ist, dass sich der kleinste Abstand c5 in einem Winkelbereich α von maximal 120° oder aber besser von maximal 70° erstreckt. Es ist ebenso möglich, dass die Düsenkappe 5 genau einen radial zur Düsenkappenbohrung 5.1 gerichteten kleinsten Abstand c5 in eine Richtung aufweist. Auf eine bildliche Darstellung wurde hier verzichtet, sie kann aber aus den Beispielen der Figuren 4a bis 4j und Figuren 15a bis 15d hergeleitet werden.

Die äußere Kontur AK5 weist in dem axial zur Düsenkappenbohrung 5.1 nach rechts oder links zur virtuellen Verbindungslinie des kleinsten Abstandes c5 zwischen dem minimalen Winkel βₘᵢₙ von 60° und dem maximalen Winkel βₘₐₓ von 120° gedrehten Winkelbereich zumindest einen radial zur Düsenkappenbohrung 5.1 gerichteten größten Abstand d5 zwischen der durch den Mittelpunkt der Düsenkappenbohrung 5.1 der Düsenkappe 5 verlaufenden Längsachse M1 und der äußeren Kontur AK5 auf. Dargestellt ist der nach rechts um βₘᵢₙ bis βₘₐₓ gedrehte Winkelbereich.

Der kleinste Abstand c5 beträgt hier beispielhaft 13 mm und der größte Anstand d5 beispielhaft 19 mm. Damit beträgt der kleinste Abstand c5 weniger als 3/4 des größten Abstandes d5.

Die Figur 11d zeigt die zu Figur 11c entgegengesetzte Ansicht auf das von der Düsenkappenspitze und der Düsenkappenbohrung 5.1 entgegengesetzte Ende der Düsenkappe 5.

Die äußere Kontur AK5 der Düsenkappe 5 ist nicht kreisförmig/rotationssymmetrisch um die Längsachse M1.

Die Figuren 12a bis 12d zeigen eine erfindungsgemäße Düsenschutzkappe 8, die in eine Anordnung nach den Figuren 7a bis 7c eingebaut sein kann. Die Figuren 12a und 12b zeigen Schnittdarstellungen der Seitenansichten der Düsenschutzkappe 8, die um 90° um die durch die Düsenschutzkappenbohrung 8.1 verlaufende Mittellinie M1 zueinander gedreht sind. Zur Düsenschutzkappenspitze in Richtung zur Düsenschutzkappenbohrung 8.1 hin weisend, weist die Düsenschutzkappe 8 einen sich unter dem Winkel γ8, hier beispielhaft 100°, konisch verjüngenden Abschnitt auf.

Die Figur 12c zeigt die Ansicht auf die Düsenschutzkappenspitze mit der Düsenschutzkappenbohrung 8.1 und es ist die äußere Kontur AK8 der Düsenschutzkappe 8 erkennbar. Ist die Düsenschutzkappe 8 in den Plasmaschneidbrenner 1 eingebaut, würde diese der Plasmabrennerspitze 1.25 entsprechen.

Es ist links und rechts der Düsenschutzkappenbohrung 8.1 jeweils genau ein radial zur Düsenschutzkappenbohrung 8.1 gerichteter kleinster Abstand c8 eingehalten. Dies bedeutet, dass in diesem Beispiel die Anordnung genau zwei radial zur Düsenschutzkappenbohrung 8.1 gerichtete kleinste Abstände c8 zwischen der durch den Mittelpunkt der Düsenschutzkappenbohrung 8.1 der Düsenschutzkappe 8 verlaufenden Längsachse M1 und der äußeren Kontur AK8 eingehalten sind.

Ein Winkelbereich α existiert in diesem Ausführungsbeispiel nicht oder er beträgt 0°. Es ist aber auch möglich, dass die äußere Kontur AK8 so ausgebildet ist, dass sich der kleinste Abstand c8 in einem Winkelbereich α von maximal 120° oder aber besser von maximal 70° erstreckt. Es ist ebenso möglich, dass die Düsenschutzkappe 8 genau einen radial zur Düsenschutzkappenbohrung 8.1 gerichteten kleinsten Abstand c8 in eine Richtung aufweist. Auf eine bildliche Darstellung wurde hier verzichtet, sie kann aber aus den Beispielen der Figuren 4a bis 4j und Figuren 15a bis 15d hergeleitet werden.

Die äußere Kontur AK8 weist in dem axial zur Düsenschutzkappenbohrung 8.1 nach rechts oder links zur virtuellen Verbindungslinie des kleinsten Abstandes c8 zwischen dem minimalen Winkel βₘᵢₙ von 60° und dem maximalen Winkel βₘₐₓ von 120° gedrehten Winkelbereich zumindest einen radial zur Düsenschutzkappenbohrung 8.1 gerichteten größten Abstand d8 zwischen der durch den Mittelpunkt der Düsenschutzkappenbohrung 8.1 der Düsenschutzkappe 8 verlaufenden Längsachse M1 und der äußeren Kontur AK8 auf. Dargestellt ist der nach rechts um βₘᵢₙ bis βₘₐₓ gedrehte Winkelbereich.

Der kleinste Abstand c8 beträgt hier beispielhaft 14 mm und der größte Anstand d8 beispielhaft 19 mm. Damit beträgt der kleinste Abstand c8 weniger als 3/4 des größten Abstandes d8.

Die Figur 12d zeigt die zu Figur 12c entgegengesetzte Ansicht auf das von der Düsenschutzkappenspitze und der Düsenschutzkappenbohrung 8 .1 entgegengesetzte Ende der Düsenschutzkappe 8.

Die äußere Kontur AK8 der Düsenschutzkappe 8 ist nicht kreisförmig/rotationssymmetrisch.

Die Figuren 13a bis 13d zeigen eine Ausführung mit Düsenschutzkappenhalterung 9, die in eine Anordnung nach den Figuren 8a bis 8c eingebaut sein kann. Die Figuren 13a und 13b zeigen Schnittdarstellungen der Seitenansichten der Düsenschutzkappenhalterung 9, die um 90° um die durch die Düsenschutzkappenhalterungsbohrung 9.1 verlaufende Mittellinie M1 zueinander gedreht sind. Zur Düsenschutzkappenhalterungsspitze in Richtung zur Düsenschutzkappenhalterungsbohrung 9.1 weisend, weist hat die Düsenschutzkappenhalterung 9 einen sich unter dem Winkel γ9, hier beispielhaft 48°, konisch verjüngenden Abschnitt auf.

Die Figur 13c zeigt die Ansicht auf die Düsenschutzkappenhalterungsspitze mit der Düsenschutzkappenhalterungsbohrung 9.1 und es ist die äußere Kontur AK9 der Düsenschutzkappenhalterung 9 erkennbar. Ist die Düsenschutzkappenhalterung 9 in den Plasmaschneidbrenner 1 eingebaut, würde diese in Richtung der Plasmabrennerspitze 1.25 hinter der Düsenschutzkappe 8, wie in den Figuren 8a bis 8c gezeigt, angeordnet sein.

Es ist oberhalb und unterhalb der Düsenschutzkappenhalterungsbohrung 9.1 jeweils genau ein radial zur Düsenschutzkappenhalterungsbohrung 9.1 gerichteter kleinster Abstand c9 eingehalten. Dies bedeutet, dass in diesem Beispiel die Anordnung genau zwei radial zur Düsenschutzkappenhalterungsbohrung 9.1 gerichtete kleinste Abstände c9 zwischen der durch den Mittelpunkt der Düsenschutzkappenhalterungsbohrung 9.1 der Düsenschutzkappenhalterung 9 verlaufenden Längsachse M1 und der äußeren Kontur AK9 in zwei Richtungen aufweist.

Ein Winkelbereich α existiert in diesem Ausführungsbeispiel nicht oder er beträgt 0°. Es ist aber auch möglich, dass die äußere Kontur AK9 so ausgebildet ist, dass sich der kleinste Abstand c9 in einem Winkelbereich α von maximal 120° oder aber besser von maximal 70° erstreckt. Es ist ebenso möglich, dass an der Düsenschutzkappenhalterung 9 genau ein radial zur Düsenschutzkappenhalterungsbohrung 9.1 gerichteter kleinster Abstand c9 in eine Richtung eingehalten ist. Auf eine bildliche Darstellung wurde hier verzichtet, sie kann aber aus den Beispielen der Figuren 4a bis 4j und Figuren 15a bis 15d hergeleitet werden.

Die äußere Kontur AK9 weist in dem axial zur Düsenschutzkappenhalterungsbohrung 9.1 nach rechts oder links zur virtuellen Verbindungslinie des kleinsten Abstandes c9 zwischen dem minimalen Winkel βₘᵢₙ von 60° und dem maximalen Winkel βₘₐₓ von 120° gedrehten Winkelbereich zumindest einen radial zur Düsenschutzkappenhalterungsbohrung 9.1 gerichteten größten Abstand d9 zwischen der durch den Mittelpunkt der Düsenschutzkappenhalterungsbohrung 9.1 der Düsenschutzkappenhalterung 9 verlaufenden Längsachse M1 und der äußeren Kontur AK9 auf. Dargestellt ist der nach rechts um βₘᵢₙ bis βₘₐₓ gedrehte Winkelbereich.

Der kleinste Abstand c9 beträgt hier beispielhaft 14 mm und der größte Anstand d9 beispielhaft 19 mm. Damit beträgt der kleinste Abstand c9 weniger als 3/4 des größten Abstandes d9.

Die Figur 13d zeigt die zu Figur 13c entgegengesetzte Ansicht auf das von der Düsenschutzkappenhalterungsspitze und der Düsenschutzkappenhalterungsbohrung 9 .1 entgegengesetzte Ende der Düsenschutzkappenhalterung 9.

Die äußere Kontur AK9 der Düsenschutzkappenhalterung 9 ist nicht kreisförmig/rotationssymmetrisch um die Längsachse M1.

Die Figuren 14a bis 14c zeigen eine erfindungsgemäße Anordnung mit einer Düsenschutzkappenhalterung 9 und einer Düsenschutzkappe 8, die in eine Anordnung nach den Figuren 8a bis 8c eingebaut sein kann. Die Düsenschutzkappenhalterung 9 ist mit der aus den Figuren 13a bis 13c identisch. Die Düsenschutzkappe 8 hat eine Düsenschutzkappenbohrung 8.1, durch deren Mittelpunkt die Längsachse M1 verläuft. Die Düsenschutzkappenhalterung 9 hat eine Düsenschutzkappenhalterungsbohrung 9.1, durch deren Mittelpunkt ebenfalls die Längsachse M1 verläuft. Die Figuren 14a und 14b zeigen Schnittdarstellungen der Seitenansichten der Anordnung von Düsenschutzkappe 8 und Düsenschutzkappenhalterung 9, die um 90° um die durch die Düsenschutzkappenbohrung 8.1 verlaufende Längsachse M1 8 zueinander gedreht sind. Zur Düsenschutzkappenhalterungsspitze in Richtung zur Düsenschutzkappenhalterungsbohrung 9.1 weisend, weist die Düsenschutzkappenhalterung 9 einen sich unter dem Winkel γ9, hier beispielhaft 48°, konisch verjüngenden Abschnitt auf.

Zur Düsenschutzkappenspitze in Richtung zur Düsenschutzkappenbohrung 8.1 weisend, weist die Düsenschutzkappe 8 einen sich unter dem Winkel γ8, hier beispielhaft 100°, konisch verjüngenden Abschnitt auf.

Die Figur 14c zeigt die Ansicht auf die Düsenschutzkappenspitze mit der Düsenschutzkappenbohrung 8.1 und es ist die äußere Kontur AK9 der Düsenschutzkappenhalterung 9 erkennbar. Ist die Anordnung mit Düsenschutzkappe 8 und Düsenschutzkappenhalterung 9 in den Plasmaschneidbrenner 1 eingebaut, würde diese der Plasmabrennerspitze 1.25, wie in den Figuren 8a bis 8c gezeigt, entsprechen.

Es ist oberhalb und unterhalb der Düsenschutzkappenbohrung 8.1 jeweils genau ein radial zur Düsenschutzkappenbohrung 8.1 gerichteter kleinster Abstand c9 eingehalten. Dies bedeutet, dass in diesem Beispiel die Anordnung genau zwei radial zur Düsenschutzkappenbohrung 8.1 gerichtete kleinste Abstände c9 zwischen der durch den Mittelpunkt der Düsenschutzkappenbohrung 8.1 der Düsenschutzkappe 8 verlaufenden Längsachse M1 und der Außenkontur AK9 aufweist.

Ein Winkelbereich α existiert in diesem Ausführungsbeispiel nicht oder er beträgt 0°. Es ist aber auch möglich, dass die äußere Kontur AK9 so ausgebildet ist, dass sich der kleinste Abstand c9 in einem Winkelbereich α von maximal 120° oder aber besser von maximal 70° erstreckt. Es ist ebenso möglich, dass bei der Anordnung mit Düsenschutzkappe 8 und Düsenschutzkappenhalterung 9 genau ein radial zur Düsenschutzkappenbohrung 8.1 gerichteter kleinster Abstand c9 in eine Richtung eingehalten ist. Auf eine bildliche Darstellung wurde hier verzichtet, sie kann aber aus den Beispielen der Figuren 4a bis 4j hergeleitet werden.

Die äußere Kontur AK9 weist in dem axial zur Düsenschutzkappenbohrung 8.1 nach rechts oder links zur virtuellen Verbindungslinie des kleinsten Abstandes c9 zwischen dem minimalen Winkel βₘᵢₙ von 60° und dem maximalen Winkel βₘₐₓ von 120° gedrehten Winkelbereich zumindest einen radial zur Düsenschutzkappenbohrung 8.1 gerichteten größten Abstand d9 zwischen der durch den Mittelpunkt der Düsenschutzkappenbohrung 8.1 der Düsenschutzkappen 8 verlaufenden Längsachse M1 und der äußeren Kontur AK9 auf. Dargestellt ist der nach rechts um βₘᵢₙ bis βₘₐₓ gedrehte Winkelbereich.

Der kleinste Abstand c9 beträgt hier beispielhaft 14 mm und der größte Anstand d9 beispielhaft 19 mm. Damit beträgt der kleinste Abstand c9 weniger als 3/4 des größten Abstandes d9.

Die Figur 14d zeigt die zu Figur 14c entgegengesetzte Ansicht auf das von Spitze der Anordnung aus Düsenschutzkappe 8 und Düsenschutzkappenhalterung 9 und der Düsenschutzkappenbohrung 8 .1 entgegengesetzte Ende der Düsenschutzkappenhalterung 9.

Die äußere Kontur AK9 der Anordnung aus Düsenschutzkappenhalterung 9 und Düsenschutzkappe 8 ist nicht kreisförmig/rotationssymmetrisch.

Die Figuren 15a bis 15d zeigen unterschiedliche Ausführungsbeispiele erfindungsgemäßer Plasmabrennerverschleißteile mit der Ansicht auf die Plasmabrennerspitze 1.25.

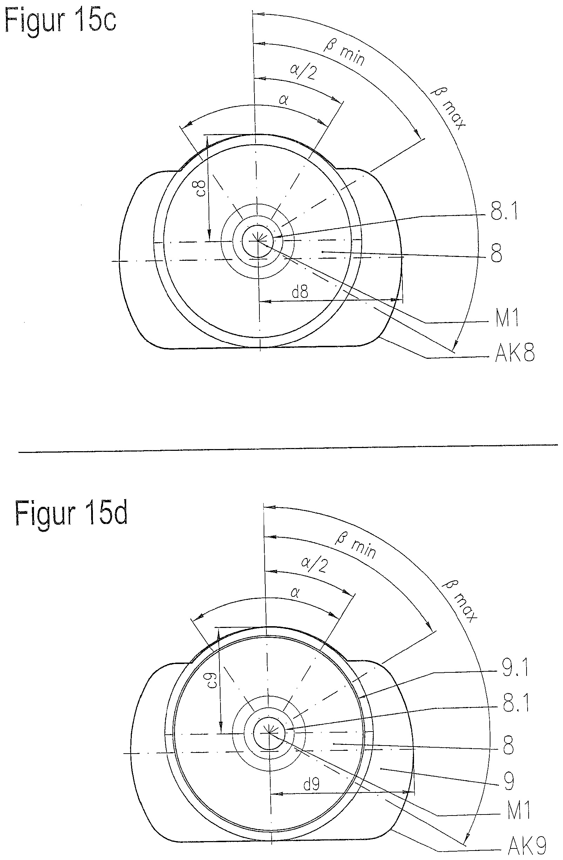

Hier ist beispielhaft in den Figuren 15a und 15c die Düsenschutzkappe gezeigt.

In den Figuren 15b und 15d ist eine Anordnung aus Düsenschutzkappe 8 und Düsenschutzkappenhalterung 9 gezeigt.

Dabei sind die kleinsten Abstände c sowie die größten Abstände d beispielhaft angegeben. In den Figuren 15a und 15b sind Beispiele gezeigt, in denen es mehrere Winkelbereiche α gibt, in denen die kleinsten Abstände c eingehalten sind. In den Figuren 4a und 4b beträgt der Winkelbereich α 67°. Es ist neben dem oben von der Düsenschutzkappenbohrung 8.1 gezeigten Winkelbereich α ein zweiter genauso großer Winkelbereich α unter der Düsenschutzkappenbohrung 8.1 vorhanden. Dieser Winkelbereich ist wegen der Übersichtlichkeit nicht dargestellt, kann aber aus der Betrachtung der Figuren 2c und 2d hergeleitet werden.

In den Figuren 15c und 15d ist der Winkelbereich α nur oben von der Düsenschutzkappenbohrung 8.1 vorhanden, während unten von der Düsenbohrung genau ein kleinster Abstand c (nicht dargestellt) eingehalten, aber kein Winkelbereich α vorhanden ist.

Ebenso sind beispielhaft unsymmetrische Ausführungsformen in den Figuren 15c und 15d gezeigt.

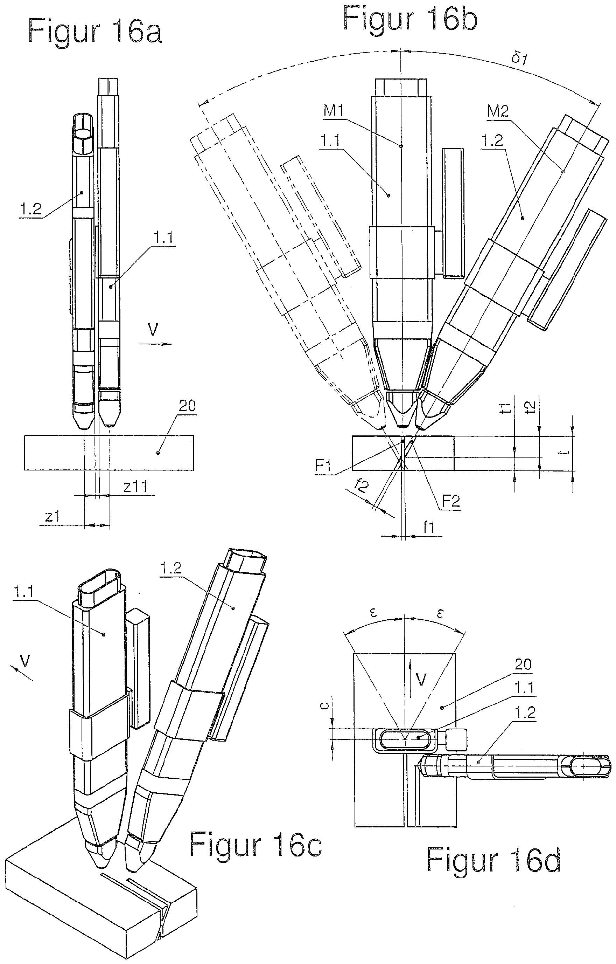

Die Figuren 16a bis 16d zeigen verschiedene Ansichten einer schematischen Anordnung mit jeweils zwei erfindungsgemäßen Plasmaschneidbrennern 1.1 und 1.2. Die Plasmaschneidbrenner schneiden ein Werkstück 20 mit der Dicke t. Auf die Darstellung der aus den Düsenbohrungen austretenden Plasmastrahlen wurde verzichtet, da ihre Richtung den aus den Düsenbohrungen austretenden Längsachsen M1 und M2 entspricht.

Es handelt sich dabei um die in Figur 3a bis 3d gezeigten Plasmaschneidbrenner 1 sowie die Anordnung gemäß des Beispiels, das in den Figuren 6a bis 6c gezeigt ist. Die Plasmaschneidbrenner sind mit der jeweiligen Seite zueinander angeordnet, an der ein kleinster Abstand c eingehalten ist. Sie sind also hier mit der beispielhaft flachen Seite zueinander angeordnet. Sie stehen sozusagen quer zur Vorschubachsrichtung v und den sich ausbildenden Schnittfugen F1, F2 und F3. So ist es möglich, die durch die Mittelpunkte der Düsenbohrungen 4.1 der jeweiligen Düse geführten Längsachsen M1 und M2 möglichst mit kleinem Abstand zueinander anzuordnen. Dies hat gegenüber Plasmaschneidbrennern nach dem Stand der Technik den Vorteil, dass der Abstand, der durch die jeweilige Düsenbohrung der beiden Plasmaschneidbrenner austretenden Plasmastrahlen, zueinander klein gehalten sein kann und alle für den Betrieb erforderlichen Elemente aufgenommen werden können. Besonders beim Schneiden von Konturen, wie hier mit zwei bzw. drei Plasmaschneidbrennern gleichzeitig, insbesondere von Ecken, Kreisen und nichtlinearen Formen ist ein kleiner Abstand wegen der höheren Genauigkeit der entstehenden Kontur von Vorteil. Da die Anordnung nach Figur 6a bis 6c und damit auch die Düsenkappe 5 nach Figur 10a bis 10c in den beispielhaft gezeigten Plasmaschneidbrennern eingesetzt ist, bei denen der kleinste Abstand c gleich 12 mm ist, kann der Abstand z1, der zwischen den Längsachsen M1 und M2 eingehalten ist, lediglich 25 mm betragen. Hier kann dann zwischen den äußeren Konturen beider Plasmaschneidbrenner ein minimaler Abstand z11 von 1 mm eingehalten werden.

Es ist weiterhin in den Figuren 16 a bis 16d gezeigt, dass die Längsachsen M1 und M2 und damit die Plasmaschneidbrenner 1.1 und 1.2 um den Winkel δ1 zueinander geneigt sind. Der Winkelbereich kann von 0 bis 60° in beide Richtungen gewählt werden.

Dies wird für das Schneiden von Fasen für die Schweißnahtvorbereitung, für die unterschiedliche Winkel der beim Schneiden entstehenden Schnittkanten benötigt werden, benötigt. Beispiele dafür sind unter anderem in der DIN EN ISO 9692-2 erläutert. In Figur 16b ist das Schneiden einer sogenannten Y-Naht gezeigt. Dabei werden durch den nahezu senkrecht zum Werkstück 20 angeordneten Plasmaschneidbrenner 1.1 zunächst die Schnittfuge F1 mit der Breite f1 und danach die schräge Schnittfuge F2 mit der Breite f2. Ergebnis ist dann, wie der rechte Teil des Werkstücks 20 in Bild 16b zeigt, eine Schnittkante mit einem senkrechten Steg t1 und einer schräg geneigten Flanke oder Fase t2 der Schnittkante.

Das Schneiden solcher Fasen ist erst ab einer Werkstückdicke von 10 mm sinnvoll und kann je nach Anwendung auch 50 mm betragen. Die Materialdicke, die ein geneigter Plasmaschneidbrenner schneiden kann, ist in Abhängigkeit vom Winkel δ1 deutlich größer und kann das 1,5-Fache, also 15 mm oder auch 75 mm betragen. Der elektrische Strom beim Plasmaschneiden, mit dem solche Materialdicken produktiv geschnitten werden können, beträgt mindestens 200 A. Die Düsenbohrungen 4.1 der Düsen 4 haben dann einen Durchmesser von mindestens 1,7 mm, besser 2,0 mm bis hin zu 2,4 mm. Für größere Materialdicken wird mit größeren Strömen, z.B. 400 A und auch größeren Durchmessern der Düsenbohrungen, z.B. mit Durchmesser größer 3 mm geschnitten. Die Plasmaschneidbrenner und deren Bauform müssen also geeignet sein, solche elektrischen Ströme sicher übertragen zu können und gleichzeitig möglichst dicht nebeneinander angeordnet werden können, um beim Schneiden eine möglichst hohe Konturgenauigkeit der gewünschten zu schneidenden Form des Werkstücks zu erreichen. Zumindest ein Verschleißteil solcher Plasmaschneidbrenner, insbesondere die Elektrode 2, die Düse 4 und/oder die Düsenkappe 5 können, wie bereits in den Figuren 5a bis 8c gezeigt, flüssigkeitsgekühlt sein.

Plasmaschneidbrenner nach dem Stand der Technik haben in diesem Strombereich, wie in Figuren 1a bis 1c gezeigt, eine kreisförmige äußere Kontur mit einem Durchmesser von 50 mm und können somit nicht so dicht nebeneinander, wie die bei der Erfindung eingesetzten Plasmaschneidbrenner angeordnet werden.

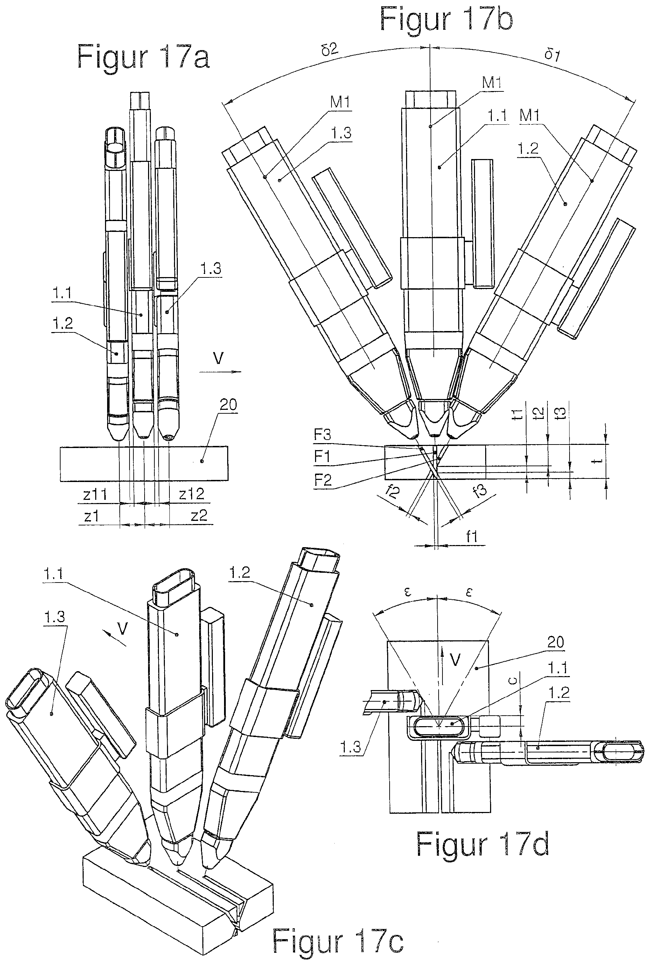

Mindestens eine virtuelle Verbindungslinie zumindest eines kleinsten Abstands c, der zwischen der äußeren Kontur AK und der durch den Mittelpunkt der Düsenbohrung 4.1 der Düse 4 verlaufenden Längsachse M1 eingehalten ist, der von der Vorschubachsrichtung v des Plasmaschneidbrenners gegenüber dem Werkstück 20 mit einem Winkel ε von maximal 30°, bevorzugt maximal 15°, besonders bevorzugt maximal 5° geneigt und ganz besonders bevorzugt parallel dazu ausgerichtet ist. Dies ist in Figur 16d und Figur 17d gezeigt.

Die Figuren 17a bis 17d zeigen verschiedene Ansichten einer Anordnung mit drei erfindungsgemäßen Plasmaschneidbrennern 1.1, 1.2 und 1.3. Die Plasmaschneidbrenner schneiden ein Werkstück 20 mit der Dicke t. Auf die Darstellung der aus den Düsenbohrungen austretenden Plasmastrahlen wurde verzichtet, da ihre Richtung den aus den Düsenbohrungen austretenden Längsachsen M1, M2 und M3 entspricht.

Es handelt sich dabei um die in Figur 3a bis 3d gezeigten Plasmaschneidbrenner sowie die Anordnung gemäß dem in den Figuren 6a bis 6c gezeigten Beispiel. Die Plasmaschneidbrenner 1.1, 1.2 und 1.3 sind mit der jeweiligen Seite zueinander angeordnet, auf der ein kleinster Abstand c eingehalten ist. Sie sind also hier mit der beispielhaft flachen Seite, zueinander weisend ausgerichtet, angeordnet. Sie sind sozusagen quer zur Vorschubachsrichtung v und den sich ausbildenden Schnittfugen F1, F2 und F3 ausgerichtet. So ist es möglich, die durch die Mittelpunkte der Düsenbohrungen 4.1 jeweiligen Düse geführten Längsachsen M1, M2 und M3 möglichst dicht nebeneinander anzuordnen. Dies hat gegenüber Plasmaschneidbrennern nach dem Stand der Technik den Vorteil, dass der Abstand der durch die jeweilige Düsenbohrung der beiden Plasmaschneidbrenner austretenden Plasmastrahlen zueinander klein sein kann. Besonders beim Schneiden von Konturen, wie hier mit drei Plasmaschneidbrennern gleichzeitig, insbesondere von Ecken, Kreisen und nichtlinearen Formen ist ein geringer Abstand wegen der höheren Genauigkeit der entstehenden Schneidkontur von Vorteil. Da die Anordnung nach Figur 6a bis 6c und damit auch die Düsenkappe 5 nach Figur 10a bis 10c in den beispielhaft gezeigten Plasmaschneidbrennern 1.1, 1.2 und 1.3 eingesetzt sein kann, bei denen der kleinste Abstand c 12 mm ist, kann der Abstand z1, der zwischen den Längsachsen M1 und M2 und der Abstand z2, der zwischen den Längsachsen M1 und M3 eingehalten werden muss, jeweils 25 mm betragen. Hier kann dann zwischen den äußeren Konturen AK zwischen den Plasmaschneidbrennern 1.1 und 1.2 sowie 1.1 und 1.3 jeweils ein minimaler Abstand z11 und z12 von 1 mm erreicht werden. Der minimale Abstand zwischen den Längsachsen M2 und M3 der Plasmaschneidbrenner 1.3 und 1.2 beträgt damit nur 50 mm.

Es ist weiterhin in den Figuren 17a bis 17d gezeigt, dass die Längsachsen M1 und M2 und damit die Plasmaschneidbrenner 1.1 und 1.2 um den Winkel 61 sowie die Längsachsen M1 und M3 und damit die Plasmaschneidbrenner 1.1 und 1.3 um den Winkel δ2 zueinander geneigt sein können. Der Winkelbereich für die Winkel 61 und δ2 kann von 0 bis 60° in beide Richtungen betragen.

Dies wird für das Schneiden von Fasen für die Schweißnahtvorbereitung, für die unterschiedliche Winkel der beim Schneiden entstehenden Schnittkanten erforderlich sind, benötigt. Beispiele dafür sind unter anderem in der DIN EN ISO 9692-2 erläutert. In Figur 17b ist das Schneiden einer sogenannten DY-Naht gezeigt. Dabei wird zunächst die schräge Schnittfuge F3 mit der Breite f3 durch den schräg um den Winkel δ2 zum Plasmaschneidbrenner 1.1 geneigten Plasmaschneidbrenner 1.3 ausgebildet. Durch den nahezu senkrecht zum Werkstück angeordneten Plasmaschneidbrenner 1.1 wird die Schnittfuge F1 mit der Breite f1 und durch den um den Winkel δ1 geneigten Plasmaschneidbrenner 1.2 wird die schräge Schnittfuge F2 mit der Breite f2 ausgebildet. Das Ergebnis ist dann, wie der rechte Teil des Werkstücks 20 in Bild 16b zeigt, eine Schnittkante (nach EN ISO 9692-2) mit einem senkrechten Steg t1, einer oberen Flanke oder Fase t2 und einer unteren schrägen Flanke oder Fase t3.

Das Schneiden dieser Fasen ist erst ab einer Werkstückdicke t von 16 mm sinnvoll und kann je nach Anwendung auch 50 mm betragen. Die Materialdicke, die der geneigte Plasmaschneidbrenner schneiden muss, ist in Abhängigkeit von den Winkeln δ1 und δ2 deutlich größer und kann das 1,5-fache, also 24 mm bis 75 mm betragen. Der elektrische Strom beim Plasmaschneiden, mit dem solche Materialdicken produktiv geschnitten werden können beträgt mindestens 200 A, die Düsenbohrungen 4.1 der Düsen 4 haben dann einen Durchmesser von mindestens 1,7 mm, besser 2,0 mm bis hin zu 2,4 mm. Für größere Materialdicken wird mit größeren elektrischen Strömen, z.B. 400 A und auch größeren Durchmessern der Düsenbohrungen, z.B. mit größer 3 mm geschnitten. Die Plasmaschneidbrenner und deren Bauform sollen also geeignet sein, solche elektrischen Ströme sicher übertragen zu können und gleichzeitig möglichst dicht nebeneinander angeordnet werden können, um beim Schneiden eine möglichst hohe Konturgenauigkeit der gewünschten zu schneidenden Form des Werkstücks zu erreichen.

Zumindest ein Verschleißteil solcher Plasmaschneidbrenner, insbesondere die Elektrode 2, die Düse 4 und/oder die Düsenkappe 5 sind, wie bereits in den Figuren 5a bis 8c gezeigt, flüssigkeitsgekühlt.

Plasmaschneidbrenner nach dem Stand der Technik haben in diesem elektrischen Strombereich, wie in Figuren 1a bis 1c gezeigt, eine kreisförmige äußere Kontur mit einem Durchmesser von 50 mm und können somit nicht so dicht, wie die erfindungsgemäßen Plasmaschneidbrenner nebeneinander angeordnet werden, ohne dass es zu Abweichungen von der gewünschten zu schneidenden Kontur oder Qualitätseinbußen kommt.

## Patentansprüche

1. Plasmaschneidbrenneranordnung mit mindestens einem Plasmaschneidbrenner (1.1, 1.2, 1.3), der mit einem Brennerkörper (1.10), einer Elektrode (2) und einer Düse (4) mit einer Düsenbohrung (4.1) gebildet ist, wobei in Bezug zu einer Längsachse (M1, M2, M3), die senkrecht durch die Düsenbohrung (4.1) ausgerichtet ist, eine äußere Kontur (AK) des Plasmaschneidbrenners (1.1, 1.2, 1.3) im Querschnitt vorhanden ist,
**dadurch gekennzeichnet, dass** in mindestens eine Achsrichtung ein kleinster Abstand (c) zwischen der durch den Mittelpunkt der Düsenbohrung (4.1) der Düse (4) verlaufenden Längsachse (M1, M2, M3) und dem radial äußeren Rand der äußeren Kontur (AK) eingehalten ist, der maximal 3/4 der Länge eines größten Abstandes (d) zwischen der durch den Mittelpunkt der Düsenbohrung (4.1) der Düse (4) verlaufenden mittleren Längsachse (M1, M2, M3) und dem radial äußeren Rand der äußeren Kontur (AK) entspricht und
der kleinste Abstand (c) maximal 3/8 der Länge eines größten Abstandes (b) zwischen zwei Punkten des äußeren Randes der äußeren Kontur (AK), deren virtuelle gerade Verbindungslinie durch den Mittelpunkt der Düsenbohrung (4.1) der Düse (4) verlaufenden mittleren Längsachse (M1, M2, M3) verläuft, entspricht und wobei der kleinste Abstand (c) über die gesamte Länge des Plasmaschneidbrenners (1.1, 1.2, 1.3) eingehalten ist, und wobei entweder der kleinste Abstand (c) zwischen der durch den Mittelpunkt der Düsenbohrung (4.1) der Düse (4) verlaufenden Längsachse (M1, M2, M3) und dem radial äußeren Rand der äußeren Kontur (AK) über mindestens eine Länge (l), die mindestens dem 1,4-fachen der maximalen Breite des Plasmaschneidbrenners (1.1, 1.2, 1.3) in dem Bereich, in dem der kleinste Abstand (c) eingehalten ist, entspricht, eingehalten ist
oder
der kleinste Abstand (c) in mindestens einem Winkelbereich α von maximal 120°, bevorzugt maximal 70° ausgehend um die Längsachse (M1, M2, M3) eingehalten ist
oder
die äußere Kontur (AK) in dem axial zur Düsenbohrung (4.1) nach rechts oder links zur virtuellen Verbindungslinie des kleinsten Abstandes (c) oder zur virtuellen Verbindungslinie, die auf der Hälfte des Winkelbereiches α des kleinsten Abstandes (c) angeordnet ist, zwischen einem minimalen Winkel βₘᵢₙ von 60° und dem maximalen Winkel βₘₐₓ von 120° gedrehten Winkelbereich zumindest einen radial zur Düsenbohrung (4.1) gerichteten größten Abstand (d), zwischen zwei Punkten des größten Abstandes (b) der äußeren Kontur (AK), dessen virtuelle gerade Verbindungslinie die durch den Mittelpunkt der Düsenbohrung 4.1 der Düse 4 verlaufende virtuelle Längsachse (M1, M2, M3) schneidet, aufweist
oder
zumindest einen radial zur Düsenbohrung (4.1) gerichteten größten Abstand (b), zwischen der durch den Mittelpunkt der Düsenbohrung (4.1) der Düse (4) verlaufenden Längsachse (M1, M2, M3) und dem radial äußeren Rand der äußeren Kontur (AK) aufweist
oder
an dem Plasmabrenner (1.1) mindestens der kleinste Abstand (c) einer äußeren Kontur (AK) in Richtung mindestens eines weiteren neben dem Plasmabrenner (1.1) betriebenen Plasmabrenners (1.2, 1.3) eingehalten ist
wobei ein maximaler Abstand z1, z2 zwischen virtuell verlängerten Längsachsen (M1.1,M1.2, M1.3) der jeweiligen Düsenbohrungen (4.1) der Düsen (4) von nebeneinander angeordneten Plasmaschneidbrennern (1.1, 1.2, 1.3) von 42 mm, vorteilhaft 32 mm und besonders vorteilhaft 27 mm eingehalten ist.

2. Anordnung nach Anspruch 1, **dadurch gekennzeichnet, dass** der kleinste Abstand (c) entlang einer gemeinsamen Achse, die ausgehend von der durch den Mittelpunkt der Düsenbohrung (4.1) der Düse (4) verlaufenden Längsachse (M1, M2, M3) bis zum radial äußeren Rand der äußeren Kontur (AK) geführt ist, in zwei entgegengesetzten Richtungen eingehalten ist.

3. Anordnung nach einem der vorhergehenden Ansprüche, **dadurch gekennzeichnet, dass** der kleinste Abstand (c) von maximal 1/3, bevorzugt von maximal 1/4 und besonders bevorzugt von maximal 1/6 des größten Abstandes (b) eingehalten ist
oder
dass der-kleinste Abstand (c) von maximal 2/3, bevorzugt von maximal 1/2 und besonders bevorzugt von maximal 1/3 des größten Abstandes (d) eingehalten ist.

4. Anordnung nach einem der vorhergehenden Ansprüche, **dadurch gekennzeichnet, dass** der kleinste Abstand (c) von maximal 20 mm, bevorzugt maximal 15 mm und besonders bevorzugt von maximal 12,5 mm eingehalten ist.

5. Anordnung nach einem der vorhergehenden Ansprüche, **dadurch gekennzeichnet, dass** die äußere Kontur (AK) eine kreisförmige, mehreckige, eine gekrümmte, eine halbkreisförmige, eine ovale oder eine elliptische Form oder eine Kombination davon aufweist.

6. Anordnung nach einem der vorhergehenden Ansprüche, **dadurch gekennzeichnet**, das mindestens eine virtuelle Verbindungslinie zumindest des kleinsten Abstands (c), der zwischen der äußeren Kontur AK und der durch den Mittelpunkt der Düsenbohrung (4.1) der Düse (4) verlaufenden Längsachse (M1) eingehalten ist, von der Vorschubachsrichtung (v) des Plasmaschneidbrenners (1.1, 1.2, 1.3) gegenüber dem Werkstück (20) mit einem Winkel ε von maximal 30°, bevorzugt maximal 15°, besonders bevorzugt maximal 5° geneigt und ganz besonders bevorzugt parallel dazu ausgerichtet ist.

7. Verwendung von Verschleißteilen bei einer Anordnung nach einem der vorhergehenden Ansprüche, wobei bei mindestens einem der Plasmaschneidbrenner (1.1, 1.2, 1.3) als Verschleißteile insbesondere eine Düse (4) oder eine Düsenkappe (5) oder eine Düsenschutzkappe (8) oder eine Düsenschutzkappenhalterung (9) vorhanden sind, die eine äußere Kontur (AK) aufweisen, die die Bedingungen des Anspruchs 1 erfüllt.

## Claims

1. A plasma cutting torch system comprising at least one plasma cutting torch (1.1, 1.2, 1.3), which is formed by a torch body (1.10), an electrode (2) and a nozzle (4) having a nozzle borehole (4.1), an outer contour (AK) of the plasma cutting torch (1.1, 1.2, 1.3) being present in a cross-section with respect to a longitudinal axis (M1, M2, M3) that is aligned perpendicularly through the nozzle borehole (4.1),
**characterized in that**
a smallest spacing (c) between the longitudinal axis (M1, M2, M3) extending through the center of the nozzle borehole (4.1) of the nozzle (4) and the radially outer edge of the outer contour (AK) is maintained in at least one axial direction and corresponds to no more than 3/4 of the length of a largest spacing (d) between the central longitudinal axis (M1, M2, M3) extending through the center of the nozzle borehole (4.1) of the nozzle (4) and the radial outer edge of the outer contour (AK), and
the smallest spacing (c) corresponds to no more than 3/8 of the length of a largest spacing (b) between two points of the outer edge of the outer contour (AK) whose virtual straight connecting line extends through the central longitudinal axis (M1, M2, M3) extending through the center of the nozzle borehole (4.1) of the nozzle (4),
and the smallest spacing (c) being maintained over the entire length of the plasma cutting torch (1.1, 1.2, 1.3), and either the smallest spacing (c) being maintained between the longitudinal axis (M1, M2, M3) extending through the center of the nozzle borehole (4.1) of the nozzle (4) and the radially outer edge of the outer contour (AK) over at least a length (I) that corresponds to at least 1.4 times the maximum width of the plasma cutting torch (1.1, 1.2, 1.3) in the region in which the smallest spacing (c) is maintained,
or
the smallest spacing (c) being maintained in at least an angular range a of no more than 120°, preferably no more than 70°, starting about the longitudinal axis (M1, M2, M3),
or
the outer contour (AK) having at least one largest spacing (d), directed radially to the nozzle borehole (4.1), between two points of the largest spacing (b) of the outer contour (AK) whose virtual straight connecting line intersects the virtual longitudinal axis (M1, M2, M3) extending through the center of the nozzle borehole 4.1 of the nozzle 4, in the angular range which is rotated axially to the nozzle borehole (4.1) to the right or left to the virtual connecting line of the smallest spacing (c) or to the virtual connecting line that is arranged at half the angular range a of the smallest spacing (c) between a minimum angle βₘᵢₙ of 60° and the maximum angle of βₘₐₓ of 120°,
or
having at least one largest spacing (b), directed radially to the nozzle borehole (4.1), between the longitudinal axis (M1, M2, M3) extending through the center of the nozzle borehole (4.1) of the nozzle (4) and the radially outer edge of the outer contour (AK),
or
at least the smallest spacing (c) of an outer contour (AK) being maintained at the plasma torch (1.1) in the direction of at least one further plasma torch (1.2, 1.3) operated next to the plasma torch (1.1),
wherein
a maximum spacing z1, z2 of 42 mm, advantageously 32 mm, and particularly advantageously 27 mm is maintained between virtually extended longitudinal axes (M1.1, M1.2, M1.3) of the respective nozzle boreholes (4.1) of the nozzles (4) of plasma cutting torches (1.1, 1.2, 1.3) arranged next to one another.

2. The system according to claim 1, **characterized in that** the smallest spacing (c) in two opposite directions is maintained along a shared axis which is guided, starting from the longitudinal axis (M1, M2, M3) extending through the center of the nozzle borehole (4.1) of the nozzle (4), up to the radially outer edge of the outer contour (AK).

3. The system according to any one of the preceding claims, **characterized in that** the smallest spacing (c) of no more than 1/3, preferably of no more than 1/4, and particularly preferably of no more than 1/6 of the largest spacing (b) is maintained, or that the smallest spacing (c) of no more than 2/3, preferably of no more than 1/2, and particularly preferably of no more than 1/3 of the largest spacing (d) is maintained.

4. The system according to any one of the preceding claims, **characterized in that** the smallest spacing (c) of no more than 20 mm, preferably no more than 15 mm, and particularly preferably of no more than 12.5 mm is maintained.

5. The system according to any one of the preceding claims, **characterized in that** the outer contour (AK) has a circular, polygonal, a curved, a semicircular, an oval or an elliptical shape or a combination thereof.

6. The system according to any one of the preceding claims, **characterized in that** at least one virtual connecting line of at least the smallest spacing (c), which is maintained between the outer contour AK and the longitudinal axis (M1) extending through the center of the nozzle borehole (4.1) of the nozzle (4), is inclined from the feed axis direction (v) of the plasma cutting torch (1.1, 1.2, 1.3) with respect to the workpiece (20) by an angle e of no more than 30°, preferably no more than 15°, particularly preferably no more than 5°, and most particularly preferably is aligned parallel thereto.

7. Use of wear parts in a system according to any one of the preceding claims, wherein in at least one of the plasma cutting torches (1.1, 1.2, 1.3) in particular a nozzle (4) or a nozzle cap (5) or a nozzle protective cap (8) or a nozzle protective cap holder (9) are present as wear parts, which have an outer contour (AK) that satisfies the conditions of claim 1.

## Revendications

1. Agencement de chalumeau à plasma avec au moins un chalumeau à plasma (1.1, 1.2, 1.3), qui est formé avec un corps de chalumeau (1.10), une électrode (2) et une buse (4) avec un alésage de buse (4.1), dans lequel par rapport à un axe longitudinal (M1, M2, M3) qui est orienté perpendiculairement à travers l'alésage de buse (4.1), un contour extérieur (AK) du chalumeau à plasma (1.1, 1,2, 1,3) est présent en section transversale,
**caractérisé en ce que**
dans au moins une direction axiale, une distance la plus petite (c) est maintenue entre l'axe longitudinal (M1, M2, M3) s'étendant à travers le centre de l'alésage de buse (4.1) de la buse (4) et le bord extérieur radial du contour extérieur (AK), qui correspond au maximum à 3/4 de la longueur d'une distance la plus grande (d) entre l'axe longitudinal central (M1, M2, M3) s'étendant à travers le centre de l'alésage de buse (4.1) de la buse (4) et le bord extérieur radial du contour extérieur (AK), et
la distance la plus petite (c) correspond au maximum à 3/8 de la longueur d'une distance la plus grande (b) entre deux points du bord extérieur du contour extérieur (AK), dont la ligne de liaison droite virtuelle s'étend sur l'axe longitudinal central (M1, M2, M3) s'étendant à travers le centre de l'alésage de buse (4.1) de la buse (4),
et dans lequel la distance la plus petite (c) est maintenue sur toute la longueur du chalumeau à plasma (1.1, 1,2, 1,3), et dans lequel la distance la plus petite (c) entre l'axe longitudinal (M1, M2, M3) s'étendant à travers le centre de l'alésage de buse (4.1) de la buse (4) et le bord extérieur radial du contour extérieur (AK) est maintenue sur au moins une longueur (l), qui correspond au moins à 1,4 fois la largeur maximale du chalumeau à plasma (1.1, 1,2, 1,3) dans la zone dans laquelle la distance la plus petite (c) est maintenue,
ou
la distance la plus petite (c) est maintenue dans au moins une plage angulaire α, à un maximum de 120°, de préférence à un maximum de 70°, commençant autour de l'axe longitudinal (M1, M2, M3),
ou
le contour extérieur (AK) présente au moins une distance la plus grande (d) orientée radialement par rapport à l'alésage de buse (4.1) dans la plage angulaire tournée axialement par rapport à l'alésage de buse (4.1) vers la droite ou vers la gauche par rapport à la ligne de liaison virtuelle de la distance la plus petite (c) ou par rapport à la ligne de liaison virtuelle, qui est agencée sur la moitié de la plage angulaire α de la distance la plus petite (c) entre un angle minimum βₘᵢₙ de 60° et un angle maximum βₘₐₓ de 120° entre deux points de la distance la plus grande (b) du contour extérieur (AK), dont la ligne de liaison droite virtuelle recoupe l'axe longitudinal (M1, M2, M3) virtuel s'étendant à travers le centre de l'alésage de buse 4.1 de la buse 4,
ou
présente au moins une distance la plus grande (b) orientée radialement par rapport à l'alésage de buse (4.1), entre l'axe longitudinal (M1, M2, M3) s'étendant à travers le centre de l'alésage de buse (4.1) de la buse (4) et le bord extérieur radial du contour extérieur (AK),
ou
au niveau du chalumeau à plasma (1.1), au moins la distance la plus petite (c) d'un contour extérieur (AK) est maintenue dans la direction d'au moins un chalumeau à plasma supplémentaire (1.2, 1.3) fonctionnant à côté du chalumeau à plasma (1.1),
dans lequel
une distance maximale z1, z2 entre des axes longitudinaux (M1.1, M1.2, M1.3) s'étendant virtuellement des alésages de buse respectifs (4.1) de la buse (4) de chalumeaux à plasma (1.1, 1.2, 1.3) agencés les uns à côté des autres est maintenue à 42 mm, de préférence à 32 mm, et de manière encore plus préférée à 27 mm.

2. Agencement selon la revendication 1, **caractérisé en ce que** la distance la plus petite (c) est maintenue dans deux directions opposées le long d'un axe commun, qui va de l'axe longitudinal (M1, M2, M3) s'étendant à travers le centre de l'alésage de buse (4.1) de la buse (4) jusqu'au bord extérieur radial du contour extérieur (AK).

3. Agencement selon l'une quelconque des revendications précédentes, **caractérisé en ce que** la distance la plus petite (c) est maintenue à un maximum de 1/3, de préférence à un maximum de 1/4, et de manière particulièrement préférée à un maximum de 1/6, de la distance la plus grande (b),
ou
**en ce que** la distance la plus petite (c) est maintenue à un maximum de 2/3, de préférence à un maximum de 1/2 et de manière particulièrement préférée à un maximum de 1/3 de la distance la plus grande (d).

4. Agencement selon l'une quelconque des revendications précédentes, **caractérisé en ce que** la distance la plus petite (c) est maintenue à un maximum de 20 mm, de préférence à un maximum de 15 mm et de manière particulièrement préférée à un maximum de 12,5 mm.

5. Agencement selon l'une quelconque des revendications précédentes, **caractérisé en ce que** le contour extérieur (AK) présente une forme circulaire, polygonale, courbée, semi-circulaire, ovale ou elliptique, ou une combinaison de celles-ci.

6. Agencement selon l'une quelconque des revendications précédentes, **caractérisé en ce qu'**au moins une ligne de liaison virtuelle d'au moins la distance la plus petite (c), qui est maintenue entre le contour extérieur AK et l'axe longitudinal (M1) s'étendant à travers le centre de l'alésage de buse (4.1) de la buse (4), est orientée inclinée et de manière plus particulièrement préférée parallèle par rapport à la direction d'axe d'avance (v) du chalumeau à plasma (1.1, 1.2, 1.3) d'un angle ε au maximum de 30°, de préférence au maximum de 15°, de manière particulièrement préférée au maximum de 5° par rapport à la pièce à usiner (20).

7. Utilisation de pièces d'usure dans un agencement selon l'une quelconque des revendications précédentes, dans laquelle dans au moins un des chalumeaux à plasma (1.1, 1.2, 1.3), les pièces d'usure sont notamment une buse (4) ou un capuchon de buse (5) ou un capuchon de protection de buse (8) ou un support de capuchon de protection de buse (9), qui présentent un contour extérieur (AK) qui satisfait aux conditions de la revendication 1.
